# EUROPÄISCHE PATENTSCHRIFT

(11) **EP 3 770 490 B1**
(45) Veröffentlichungstag und Bekanntmachung des Hinweises auf die Patenterteilung: **21.09.2022**
(21) Anmeldenummer: 19188103.6
(22) Anmeldetag: 24.07.2019
(51) Int. Cl.: F21S 43/237, F21S 43/249, F21V 8/00, F21S 43/245

(54) **LICHTLEITER, LEUCHTELEMENT MIT EINEM SELEKTIV AUSLEUCHTBAREN LICHTLEITER UND VERFAHREN ZUR SELEKTIVEN AUSLEUCHTUNG EINES LICHTLEITERS**
LIGHT GUIDE, LIGHT ELEMENT COMPRISING A SELECTIVELY ILLUMINABLE LIGHT GUIDE AND METHOD FOR SELECTIVELY ILLUMINATING A LIGHT GUIDE
CONDUCTEUR DE LUMIÈRE, ÉLÉMENT D'ÉCLAIRAGE DOTÉ D'UN CONDUCTEUR DE LUMIÈRE SÉLECTIF ET PROCÉDÉ D'ÉCLAIRAGE SÉLECTIF D'UN CONDUCTEUR DE LUMIÈRE

(43) Veröffentlichungstag der Anmeldung: 27.01.2021
(73) Patentinhaber: odelo GmbH, 70329 Stuttgart (DE)
(72) Erfinder: HORNUNG, Herr Thorsten, 73760 Ostfildern (DE)
(74) Vertreter: Benninger, Johannes

(56) Entgegenhaltungen:
- CN-U- 206 771 179
- DE-A1-102015 205 407
- FR-A1- 3 009 065
- FR-A1- 3 032 259

## Beschreibung

Die Erfindung betrifft einen Lichtleiter gemäß dem Oberbegriff des Anspruchs 1, ein Leuchtelement mit einem selektiv ausleuchtbaren Lichtleiter gemäß dem Oberbegriff des Anspruchs 6, sowie ein Verfahren zur selektiven Ausleuchtung eines Lichtleiters gemäß dem Oberbegriff des Anspruchs 11.

Jede Fahrzeugleuchte erfüllt je nach Ausgestaltung eine oder mehrere Aufgaben beziehungsweise Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder beispielsweise eine Begrenzungslichtfunktion, wie etwa eine Schlusslichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet, insbesondere um bei zur Teilnahme eines Fahrzeugs am Straßenverkehr vorgeschriebenen Lichtfunktionen deren Wahrnehmungskraft für andere Verkehrsteilnehmer sicherzustellen.

Bekannt ist, dass Leuchtanzeigen, beispielsweise in einem Armaturenbrett eines Fahrzeugs angezeigte Warnanzeigen, die mit ihrem Aufleuchten dem Betrachter entgegen zu springen scheinen, durch ihre scheinbare Bewegung auf den Betrachter zu von diesem besonders gut wahrgenommen werden und diesen alarmieren, auch wenn dessen Blick nicht unmittelbar auf einen Bereich gerichtet ist, in dem die Warnanzeige angezeigt wird. Sie haben daher eine erhöhte Wahrnehmungskraft zur Folge.

Zunehmend werden daher Fahrzeugleuchten auch mit so genannten dynamischen Lichtfunktionen ausgestattet, da diese im Besonderen die Aufmerksamkeit anderer Verkehrsteilnehmer auf sich ziehen und dadurch einen Beitrag zur Steigerung der Verkehrssicherheit leisten können.

Bei dynamischen Lichtfunktionen werden die gesetzlich zugelassenen Grenzen genutzt, um diese im Unterschied zu einer normalen Lichtfunktion aufleben zu lassen.

Dabei wird die vom Gesetzgeber eingeräumte Zeit, die eine Glühlampe als eine gesetzlich erlaubte Lichtquelle eines zur Erfüllung einer Lichtfunktion vorgesehenen Leuchtmittels benötigt, um ihre volle Leuchtstärke zu erreichen, genutzt, um einen visuellen Effekt zu erzielen.

Ein Beispiel eines solchen visuellen Effekts ist das Wischen in Richtung einer beabsichtigten Abbiegerichtung oder eines beabsichtigten Spurwechsels bei einer zur Anzeige einer beabsichtigten Fahrtrichtungsänderung vorgesehenen Wiederholblinklichtfunktion eines Fahrtrichtungsanzeigers.

Untersuchungen haben gezeigt, dass dynamische Lichtfunktionen, wie etwa eine dynamische Wiederholblinklichtfunktion zur Fahrtrichtungsanzeige, kurz FRA, die durch das Wischen von innen nach außen in der beabsichtigten Abbiegerichtung verwirklicht sind, die Wahrnehmbarkeit der jeweiligen Lichtfunktion erhöht und damit die Reaktionszeit anderer Verkehrsteilnehmer auf die Fahrtrichtungsanzeige wesentlich verkürzt wird, weil durch das Wischen bereits bei Beginn der Wahrnehmung der Lichtfunktion durch andere Verkehrsteilnehmer die durch die Lichtfunktion angezeigte beabsichtigte Fahrtrichtungsänderung von den anderen Verkehrsteilnehmern erkannt wird.

Dabei werden einzelne, von außerhalb der Fahrzeugleuchte beim Blick durch die Lichtscheibe hindurch erkennbare Leuchtelemente nacheinander zugeschaltet, um eine wischende Bewegung von innen nach außen zu erzeugen.

Eine solche dynamische Lichtfunktion eines Fahrtrichtungsanzeigers wird bis dato durch ein Leuchtmittel mit mehreren, nacheinander der Reihe nach angehenden Lichtquellen verwirklicht.

Für Lichtfunktionen in Signalleuchten in Fahrzeugen werden häufig Lichtleiter eingesetzt, die für den Betrachter beim Blick von außerhalb der Fahrzeugleuchte auf die Lichtscheibe oder durch diese hindurch Leuchtelemente bilden. Dies hat den Vorteil, dass hierdurch ihr Licht in Lichtleiter einspeisende Lichtquellen nicht im beim Blick von außerhalb der Fahrzeugleuchte durch die Lichtscheibe hindurch unmittelbar einsehbaren Bereich angeordnet werden müssen. Hierdurch vereinfacht sich die elektrische Kontaktierung der Lichtquellen, weil gegebenenfalls weniger Lichtquellen benötigt werden und die elektrischen Kontaktierungen zudem nicht aufwändig kaschiert werden müssen, da sie ebenfalls außerhalb des einsehbaren Bereichs angeordnet werden können. Darüber hinaus ist durch den Einsatz von Lichtleitern ein wesentlich höherer Qualitätseindruck durch eine wesentlich homogenere Ausleuchtung der Leuchtelemente erzielbar, als wenn die Lichtfunktionen bildenden, für den Betrachter beim Blick von außerhalb der Fahrzeugleuchte auf die Lichtscheibe oder durch diese hindurch leuchtende Flächen darstellende Leuchtelemente durch einzelne Lichtpunkte von unmittelbar sichtbaren Lichtquellen gebildet werden.

Bisher sind dynamische Lichtfunktionen, wie etwa eine voranstehend beschriebene dynamische FRA nicht mit einem Lichtleiter verwirklichbar, weil dieser nur als Ganzes ein- oder ausgeschaltet werden kann.

Generell kann mit einem klassischen Lichtleiter das Erscheinungsbild nicht abschnittsweise getrennt geschaltet werden, selbst wenn verschiedene Lichtfunktionen gleicher Lichtfarbe erfüllt werden sollen. So ist es beispielsweise nicht möglich, nur einen Teil eines die Schlusslichtfunktion erfüllenden Lichtleiters für die Bremslichtfunktion mit zu nutzen, ohne dass sich die Helligkeit eines verbleibenden Teils ändert. Neben Designaspekten kann dies wünschenswert sein, beispielsweise um einen gesetzlich geforderten Mindestabstand von 100 mm zwischen Bremslichtfunktion und Nebelschlusslichtfunktion einzuhalten.

Da die konstruktive Auslegung um eine bestimmte Abstrahlcharakteristik eines Lichtleiters, insbesondere unter Beibehaltung etwa eines besonders homogenen Ausleuchtungszustands und damit Erscheinungsbilds zu erhalten, vergleichsweise aufwändig ist, wäre es wünschenswert, wenn beispielsweise derselbe Lichtleiter für Schlusslicht- und Bremslichtfunktion, für Fahrtrichtungsanzeiger und Rückfahrscheinwerfer oder für Fahrtrichtungsanzeiger und Tagfahrlicht verwendbar wäre. Die Einhaltung der gesetzlichen Vorgaben für die genannten Lichtfunktionen erfordert unterschiedliche Lichtstärkeverteilungen, so dass es notwendig wäre, dass der Lichtleiter für jede der Lichtfunktionen eine eigene Abstrahlcharakteristik besitzt.

Nach dem Stand der Technik ist es allerdings nicht möglich, die Abstrahlcharakteristik eines Lichtleiters, d.h. die zum Beitrag und/oder zur Erfüllung einer Lichtverteilung einer Lichtfunktion nutzbare Winkelverteilung des von dem Lichtleiter abgestrahlten Lichts, beispielsweise elektronisch zu verändern.

Nach dem Stand der Technik können demnach nur unterschiedliche Lichtfunktionen innerhalb eines Lichtleiters verwirklicht werden, indem entweder lediglich die Lichtstärke der einspeisenden LED verändert oder eine weitere einspeisende LED zusätzlich eingeschaltet wird, wie etwa für eine Bremslichtfunktion anstelle einer Schlusslichtfunktion. Alternativ kann zwischen mehreren in den Lichtleiter einspeisenden LEDs gewechselt werden. Letzteres ermöglicht ein Umschalten auf eine andere Lichtfarbe, wie etwa für den Wechsel zwischen einer Tagfahrlichtfunktion und einer Wiederholblinklichtfunktion zur Fahrtrichtungsanzeige, oder für den Wechsel zwischen einer Rückfahrlichtfunktion und einer Wiederholblinklichtfunktion zur Fahrtrichtungsanzeige.

Wenn mehrere Lichtfunktionen in einem Lichtleiter verwirklicht werden, wird in Kauf genommen, dass durch die gleichbleibende Abstrahlcharakteristik des Lichtleiters beide dieselbe, relative Lichtstärkeverteilung besitzen. Es ändern sich also lediglich die Lichtfarbe und der Lichtstrom, jedoch nicht die relative Verteilung der Lichtstärke. Die Verteilung der Lichtstärke stellt einen Kompromiss aus den umgesetzten Lichtfunktionen dar, der in der Regel mindestens bei einer der Lichtfunktionen einen höheren Lichtstrom erfordert, als für die reine Erfüllung beispielsweise der gesetzlichen Vorgaben für die jeweiligen Lichtfunktionen notwendig wäre.

Möglich ist die Verwirklichung einer dynamischen Lichtfunktion, wie etwa einer voranstehend beschriebenen dynamischen FRA, daher bislang nur ohne Lichtleiter oder mit mehreren getrennten Lichtleitern, die jeweils ein Teilelement des Leuchtelements für die Verwirklichung der dynamischen FRA bilden und nacheinander aktiviert werden können.

Durch EP 3 466 756 A1 ist ein Leuchtmittel bekannt, das einen zentralen Auskoppellichtleiter umfasst, der von mindestens zwei Zuführungslichtleitern flankiert ist. Der zentrale Auskoppellichtleiter bildet das Leuchtelement des Leuchtmittels. Der Auskoppellichtleiter umfasst eine sich über zumindest einen Teil dessen Längsausdehnung erstreckende Lichtaustrittsfläche für in ihn eingekoppeltes Licht und mindestens eine zur Einkopplung von von einer ersten Lichtquelle abgestrahltes Licht vorgesehene Auskoppellichtleiter-Lichteinkoppelfläche. Die Zuführungslichtleiter umfassen jeweils eine Zuführungslichtleiter-Lichteinkoppelfläche je gegenüberliegendes Ende eines jeden Zuführungslichtleiters zur Einkopplung von von je mindestens einer weiteren Lichtquelle an jedem der gegenüberliegenden Enden abgestrahlten Lichts. Die Zuführungslichtleiter und der Auskoppellichtleiter sind zumindest an Lichtüberkopplungsflächen, innerhalb denen Licht der Zuführungslichtleiter jeweils in den Auskoppellichtleiter übergekoppelt wird, zumindest optisch wirksam miteinander verbunden. Die Zuführungslichtleiter und/oder der Auskoppellichtleiter weisen eine derartige Auskoppelstruktur auf, dass eine segmentweise Ausleuchtung der Lichtaustrittsfläche des Auskoppellichtleiters in Abhängigkeit davon erfolgt, in welchen Zuführungslichtleiter Licht von welcher Zuführungslichtleiter-Lichteinkoppelfläche aus eingekoppelt wird.

Zusammengefasst ermöglichen Lichtleiter nur bedingt eine gezielte Ausleuchtung verschiedener Abschnitte, wie dies beispielsweise zur Verwirklichung einer dynamischen Lichtfunktion, wie etwa einer wischenden, dynamischen FRA erforderlich wäre. Eine bedingt einsetzbare Variante ist eine Lichteinspeisung von gegenüberliegenden Seiten her, wobei die Lichtauskopplung in den verschiedenen Abschnitten in Abhängigkeit davon erfolgt, von welchem Ende des Lichtleiters momentan Licht eingekoppelt wird. Die zur Lichtauskopplung für eine der beiden Lichteinkoppelrichtungen erforderlichen Auskoppelstrukturen wirken dabei jedoch - wenn auch schwach - auch in der jeweils entgegengesetzten Lichteinkoppelrichtung.

Dies geht jedoch nachteilig einher mit der Notwendigkeit, an beiden gegenüberliegenden Enden eines entsprechenden Lichtleiters getrennt ansteuerbare Lichtquellen anordnen zu müssen, wodurch die mit der Verwendung eines Lichtleiters generell erzielbaren Vorteile zumindest teils direkt wieder zunichte gemacht werden.

Durch FR 3 009 065 A1 ist ein Leuchtelement mit wenigstens zwei Lichtquellen und einem Lichtleiter bekannt. Der Lichtleiter ist einseitig gespeist, wobei beide Lichtquellen ihr Licht vom selben Ende des Lichtleiters her unter einem Winkel schräg zu dessen Längsachse in diesen einspeisen. Das auf ein auf der Längsachse liegende Brennzone konzentrierte Licht beider Lichtquellen kreuzt dabei die Längsachse. Beide Lichtquellen nutzen eine gemeinsame Auskoppelstruktur des Lichtleiters.

Durch FR 3 032 259 A1 ist ein Leuchtelement mit wenigstens zwei Lichtquellen und einem Lichtleiter bekannt. Die Lichtquellen strahlen Licht unterschiedlicher Wellenlängen ab. Sie strahlen ihr Licht einseitig vom selben Ende des Lichtleiters her in diesen ein. Im Lichtleiter ist ein für das Licht der einen Lichtquelle transparentes Fluoreszenzmaterial eingearbeitet, welches durch zumindest einen Teil des von der anderen Lichtquelle abgegebenen Lichts zur Abgabe von Licht einer weiteren Wellenlänge anregbar ist. Lichtauskoppelstrukturen auf der Rückseite des Lichtleiters lenken das Licht aller Wellenlängen gemäß vorgegebener Lichtverteilungen unter einem solchen Winkel in Richtung zur Vorderseite des Lichtleiters, dass dort keine Totalreflexion mehr auftritt und das Licht den Lichtleiter verlässt. Wird die eine Lichtquelle betrieben, wird so eine Lichtfunktion einer ersten Lichtfarbe der Wellenlänge des von der einen Lichtquelle abgegebenen Lichts erfüllt, wohingegen wenn die andere Lichtquelle betrieben wird, eine Lichtfunktion einer zweiten Lichtfarbe entweder der weiteren Wellenlänge des von dem Fluoreszenzmaterial abgegebenen Lichts oder einer zweiten Lichtfarbe einer Mischung der Wellenlänge des von der anderen Lichtquelle abgegebenen Lichts und der weiteren Wellenlänge des von dem Fluoreszenzmaterial abgegebenen Lichts erfüllt wird.

Durch DE 10 2015 205 407 A1 ist ein Leuchtelement mit wenigstens zwei Lichtquellen und einem Lichtleiter bekannt. Die Lichtquellen strahlen ihr Licht von gegenüberliegenden Stirnseiten her in den stabförmigen Lichtleiter ein. Ein Teil von entlang des Lichtleiters angeordneten Lichtauskoppelstrukturen sind dem von der einen Lichtquelle von der einen Stirnseite her eingekoppelten Licht zugeordnet, ein verbleibender Teil der entlang des Lichtleiters angeordneten Lichtauskoppelstrukturen sind dem von der anderen Lichtquelle von der gegenüberliegenden, anderen Stirnseite her eingekoppelten Licht zugeordnet.

Durch CN 206771179 U1 ist ein Lichtleiter mit quadratischem Querschnitt bekannt. Mehrere Lichtquellen koppeln ihr Licht von der selben Stirnseite her in diesen ein. Lichtauskoppelstrukturen entlang des Lichtleiters koppeln das in den Lichtleiter eingekoppelte Licht entlang des Lichtleiters unter einem für einen auf den Lichtleiter blickenden Betrachter dreidimensionalen Lichteffekt in Form einer Doppelhelix wieder aus diesem aus.

Eine Aufgabe der Erfindung ist es, einen Lichtleiter, ein Leuchtelement mit einem selektiv ausleuchtbaren Lichtleiter und ein Verfahren zur selektiven Ausleuchtung eines Lichtleiters zu schaffen, welche frei von den Nachteilen des Standes der Technik sind.

Die Aufgabe wird durch die Merkmale der unabhängigen Ansprüche gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach einen bevorzugt stabförmigen Lichtleiter mit bevorzugt zumindest annähernd rotationssymmetrischem Querschnitt, mit ersten Lichtumlenk-, beispielsweise Lichtein- oder Lichtauskoppelstrukturen und mit zweiten Lichtumlenk-, beispielsweise Lichtein- oder Lichtauskoppelstrukturen für sich in unterschiedlichen Richtungen im Inneren des Lichtleiters ausbreitendes Licht, wobei die ersten Lichtumlenk-, beispielsweise Lichtein- oder Lichtauskoppelstrukturen für sich tangential am Innenumfang des Lichtleiters rechtsdrehend schraubenförmig ausbreitendes Licht und die zweiten Lichtumlenk-, beispielsweise Lichtein- oder Lichtauskoppelstrukturen für sich tangential am Innenumfang des Lichtleiters linksdrehend schraubenförmig ausbreitendes Licht ausgebildet sind, so dass sich das im Lichtleiter ausbreitende, den unterschiedlichen Lichtumlenk-, beispielsweise Lichtein- oder Lichtauskoppelstrukturen zugedachte Licht vorzugsweise zumindest annähernd rechtwinklig kreuzt und die für das sich in der einen Richtung drehend schraubenförmig ausbreitende Licht ausgebildeten Lichtumlenk-, beispielsweise Lichtein- oder Lichtauskoppelstrukturen parallel stehen zum sich in der anderen Richtung drehend schraubenförmig ausbreitenden Licht.

Die Maßgabe, wonach sich das im Lichtleiter ausbreitende, den unterschiedlichen Lichtumlenklstrukturen zugedachte Licht vorzugsweise zumindest annähernd rechtwinklig kreuzt nimmt Bezug auf eine lokale Hauptlichtausbreitungsrichtung. Diese stimmt mit der lokalen Lichtausbreitungsrichtung bei idealem, vollständig kollimiertem Licht mit vollkommen parallel verlaufenden Lichtstrahlen überein. Der reale Verlauf weist demgegenüber einen kleinen Öffnungswinkel auf, wobei sich die Lichtstrahlen kegelförmig ausbreiten. Die lokale Hauptlichtausbreitungsrichtung entspricht bei einem solchen kleinen Öffnungswinkel der Kegelachse des sich ausbreitenden Lichts. Die Notwendigkeit einer Einschränkung auf eine lokale Hauptlichtausbreitungsrichtung ergibt sich durch die Besonderheit des sich im Lichtleiter schraubenförmig ausbreitenden Lichts.

Der Lichtleiter kann runden und/oder rotationssymmetrischen Querschnitt aufweisen. Er kann alternativ einen annähernd rotationssymmetrischen Querschnitt aufweisen, beispielsweise eine achteckige Querschnittsform.

Der Lichtleiter kann wahlweise für eine selektive Ausleuchtung eines ihn umfassenden Leuchtelements oder beispielsweise für einen richtungsabhängigen Helligkeitssensor verwendet werden.

Ein zweiter Gegenstand der Erfindung betrifft ein Leuchtelement mit wenigstens zwei Lichtquellen und einem Lichtleiter, in welchen die Lichtquellen das von ihnen abgestrahlte Licht einspeisen.

Der Lichtleiter ist bevorzugt stabförmig. Die Stabförmigkeit zeichnet sich durch eine größere Erstreckung entlang seiner Mittelachse im Vergleich zu einer Erstreckung normal hierzu aus.

Der Lichtleiter erstreckt sich demnach stabförmig entlang seiner Mittelachse beziehungsweise entlang seiner Mittelachse stabförmig. Die Mittelachse ist gebildet durch eine Aneinanderreihung von Mittelpunkten. An jedem dieser Mittelpunkte weist der Lichtleiter bevorzugt einen einfach zusammenhängenden Querschnitt auf.

Jeder Mittelpunkt kann dabei definiert sein als ein Schwerpunkt einer vom jeweiligen lokalen Querschnitt umhüllten, lokalen Querschnittsfläche.

Die Mittelachse kann dabei beispielsweise definiert sein als stetige mathematische Kurve, auf der die Schwerpunkte aller aufeinander folgender Querschnittsflächen des Lichtleiters liegen. Die Mittelachse steht dabei jeweils lokal zur jeweiligen Querschnittsfläche gesehen normal auf den Querschnittsflächen auf.

Der Ausschluss einer Unstetigkeit einer die Mittelachse abbildenden mathematischen Kurve soll sicherstellen, dass der Lichtleiter in aufeinander folgenden Querschnitten und/oder Abschnitten bzw. Bereichen, keine verschiedenen und nicht ineinander mündende Mittelachsen aufweist.

Wichtig ist in diesem Zusammenhang darauf hinzuweisen, dass im vorliegenden Dokument der Begriff Achse im Gegensatz zu dem Begriff Welle eine geometrische Achse und nicht ein Maschinenelement bezeichnet.

Der Lichtleiter kann - beispielsweise entlang seiner Mittelachse gesehen - gerade oder zwei- oder dreidimensional gekrümmt verlaufen.

Jeder Querschnitt des Lichtleiters entlang der Mittelachse kann vorteilhaft durch eine stetige, geschlossen umlaufende, mathematische Kurve beschrieben werden.

Der Lichtleiter kann beispielsweise runden und/oder rotationssymmetrischen Querschnitt aufweisen. Er kann alternativ einen annähernd rotationssymmetrischen Querschnitt aufweisen, beispielsweise eine achteckige Querschnittsform, vorzugsweise mit abgerundeten Übergängen zwischen den geraden Kanten beispielsweise des Achtecks.

Eine durch sämtliche entlang der Mittelachse des Lichtleiters aufeinander folgende Querschnitte gebildete Hüllfläche des Lichtleiters kann durch eine Kurvenschar beschrieben werden, wobei jede Kurve der Kurvenschar selbst eine stetige mathematische Kurve ist.

Die Einspeisung des Lichts der Lichtquellen erfolgt im Querschnitt des Lichtleiters betrachtet tangential und im Längsschnitt des Lichtleiters betrachtet unter entgegengesetzten Winkeln, beispielsweise in einem Winkel von + 45° von der einen Lichtquelle und in einem Winkel von - 45° von der anderen Lichtquelle. Dadurch läuft das eingespeiste Licht helixial, auch schraubenförmig oder wendelförmig genannt, mit einer Steigung von 45° einmal linksdrehend von der einen Lichtquelle und einmal rechtsdrehend von der anderen Lichtquelle den Lichtleiter entlang. Beide Lichtquellen speisen ihr Licht an einer ein Ende des Lichtleiters umfassenden Lichtleiterseite mit entgegengesetzter Helixdrehrichtung in den Lichtleiter ein.

Dadurch ergibt sich für das von der einen Lichtquelle in den Lichtleiter eingekoppelte Licht eine rechtsdrehende Ausbreitung im Lichtleiter und für das Licht der anderen Lichtquelle eine linksdrehende Ausbreitung im Lichtleiter.

Das Licht beider Lichtquellen läuft im Innern des Lichtleiters bevorzugt stets senkrecht zueinander.

Damit können gezielt Lichtauskoppelstrukturen entlang des Lichtleiters angeordnet werden, die jeweils nur für das Licht einer der Lichtquellen wirksam sind, weil das Licht nur einer der beiden Lichtquellen jeweils vorzugsweise senkrecht auf die für dessen Lichtausbreitungshelix ausgelegten Lichtauskoppelstrukturen fällt, wohingegen die für das Licht der jeweils anderen Lichtquelle vorgesehenen Lichtauskoppelstrukturen parallel zur Lichtausbreitung der jeweils einen Lichtquelle stehen beziehungsweise angeordnet sind.

Der Lichtleiter besitzt Lichtauskoppelstrukturen, wie etwa Auskoppelprismen und/oder -keile beispielsweise an der einem Betrachter abgewandten Lichtleiterrückseite, die jeweils auf eine der beiden Helixrichtungen abgestimmt sind. Das senkrecht dazu laufende Licht wird von diesen Strukturen nicht oder nur in sehr geringem Umfang ausgekoppelt. Auch der helixiale Verlauf wird nur wenig gestört. Somit lässt sich die Stärke, Richtung und lokale Verteilung der Lichtauskopplung für beide unabhängig voneinander ihr Licht in den Lichtleiter einspeisenden Lichtquellen weitgehend getrennt festlegen.

Der Lichtleiter verfügt vorzugsweise über einen Querschnitt in Form einer geschlossenen, ovalen Kurve. Beispiele hierfür sind ein elliptischer oder ein kreisförmiger Querschnitt.

Bei den Lichtquellen handelt es sich bevorzugt um LEDs.

Eine besonders bevorzugte Ausgestaltung der Erfindung umfasst demnach einen Rund-Lichtleiter, der einseitig von mindestens zwei LEDs oder beidseitig von je zwei LEDs gespeist wird. Die Einspeisung des Lichts der LEDs erfolgt dabei im Querschnitt des Lichtleiters betrachtet tangential und im Längsschnitt des Lichtleiters betrachtet in einem Winkel von 45°. Dadurch läuft das eingespeiste Licht helixial mit einer Steigung von 45° den Lichtleiter entlang. Beide LEDs an einer Lichtleiterseite speisen ihr Licht mit entgegengesetzter Helixdrehrichtung in den Lichtleiter ein. Das Licht beider LEDs läuft im Innern des Lichtleiters stets senkrecht zueinander.

Der Lichtleiter besitzt vorteilhaft an der Lichtleiterrückseite Lichtauskoppelstrukturen, wie etwa Auskoppelprismen und/oder -keile, die jeweils auf eine der beiden Helixrichtungen abgestimmt sind. Das senkrecht zu derjenigen Helixdrehrichtung, für welche diese Lichtauskoppelstrukturen ausgelegt sind, laufende Licht wird von diesen Strukturen nicht oder nur in sehr geringem Umfang ausgekoppelt. Auch der helixiale Verlauf wird nur wenig gestört. Somit lässt sich die Stärke, Richtung und lokale Verteilung der Lichtauskopplung für beide einspeisenden LEDs weitgehend getrennt festlegen.

Eine vorteilhafte Weiterbildung benutzt die Richtung der Lichteinspeisung, insbesondere hinsichtlich der Drehrichtung der Helix und/oder der Ganghöhe, um mit unterschiedlichen Lichtquellen, vorzugsweise LEDs, in verschiedene Richtungen zu leuchten. Die auch als Auskoppeloptiken bezeichenbaren Lichtauskoppelstrukturen wirken hier auf das Licht mehrerer Lichtquellen, jedoch wird beispielsweise axial eingekoppeltes Licht beispielsweise von einer Vorderseite des Lichtleiters aus gesehen horizontal abgestrahlt und helixial eingestrahltes Licht je nach Drehrichtung nach oben oder unten.

Ein dritter Gegenstand der Erfindung betrifft ein Verfahren zur selektiven Ausleuchtung eines Lichtleiters.

Ein solches Verfahren zum unabhängigen Ausleuchten zweier Abschnitte eines bevorzugt stabförmigen Lichtleiters mit vorzugsweise zumindest annähernd rotationssymmetrischem Querschnitt von einem dessen gegenüberliegenden Enden her, sieht beispielsweise vor, dass zur Ausleuchtung eines ersten Abschnitts Licht einer an einem Ende angeordneten ersten Lichtquelle tangential und um beispielsweise - 45° gegenüber der Längsachse des Lichtleiters geneigt in den Lichtleiter eingekoppelt wird, welches sich rechtsdrehend spiralförmig im Inneren des Lichtleiters an dessen Innenumfang ausbreitet, und vermittels in dem ersten Abschnitt senkrecht zur Ausbreitungsrichtung diesen Lichts angeordneten Lichtauskoppelstrukturen aus dem Lichtleiter ausgekoppelt wird, und wobei zur Ausleuchtung eines zweiten Abschnitts Licht einer an dem selben Ende angeordneten zweiten Lichtquelle tangential und um beispielsweise + 45° gegenüber der Längsachse des Lichtleiters geneigt in den Lichtleiter eingekoppelt wird, welches sich linksdrehend spiralförmig im Inneren des Lichtleiters an dessen Innenumfang ausbreitet, und vermittels in dem zweiten Abschnitt senkrecht zur Ausbreitungsrichtung diesen Lichts angeordneten Lichtauskoppelstrukturen aus dem Lichtleiter ausgekoppelt wird, wobei sich das von den beiden Lichtquellen in den Lichtleiter eingekoppelte Licht im Inneren des Lichtleiters vorzugsweise senkrecht kreuzt und die für das sich in der einen Richtung im Inneren des Lichtleiters ausbreitende Licht vorgesehenen Lichtauskoppelstrukturen parallel zur Ausbreitungsrichtung des sich in der anderen Richtung im Inneren des Lichtleiters ausbreitenden Lichts angeordnet sind.

Es ist ersichtlich, dass die Erfindung einen völlig neuartigen Ansatz verfolgt:
Bei einem Stablichtleiter wird Licht wenigstens zweier Lichtquellen von zumindest einem Ende her tangential und um 45° gegenüber der Längsachse geneigt eingeleitet, wobei das Licht der einen Lichtquelle an dem Ende um +45°, das Licht der zweiten Lichtquelle an dem selben Ende um -45° eingeleitet wird. Das Licht der zwei Lichtquellen breitet sich jeweils spiralförmig im Lichtleiter aus, wobei das von der einen Lichtquelle eingestrahlte Licht das von der anderen Lichtquelle eingestrahlte Licht immer in einem Winkel von 90° kreuzt.

Dadurch ergibt sich für das von der einen Lichtquelle in den Lichtleiter eingekoppelte Licht eine rechtsdrehende Ausbreitung im Lichtleiter und für das Licht der anderen Lichtquelle eine linksdrehende Ausbreitung im Lichtleiter.

Damit können gezielt Lichtauskoppelstrukturen entlang des Lichtleiters angeordnet werden, die jeweils nur für das Licht einer der Lichtquellen wirksam sind, weil das Licht nur einer der beiden Lichtquellen jeweils senkrecht auf die für dessen Lichtausbreitungshelix ausgelegten Lichtauskoppelstrukturen fällt, wohingegen die für das Licht der jeweils anderen Lichtquelle vorgesehenen Lichtauskoppelstrukturen parallel zur Lichtausbreitung der jeweils einen Lichtquelle stehen beziehungsweise angeordnet sind.

Die Lichtauskoppelstrukturen können alternativ für unterschiedliche Abstrahlcharakteristiken ausgelegt sein. Damit können mit nur einem Lichtleiter wenigstens zwei Lichtfunktionen mit unterschiedlichen Abstrahlcharakteristiken verwirklicht werden.

Ebenso ist ersichtlich, dass die Erfindung durch ein Leuchtelement mit zwei LEDs als Lichtquellen und mit einem von den beiden Lichtquellen gegenläufig helixial gespeisten Lichtleiter verwirklicht sein kann.

Darüber hinaus kann die Erfindung verwirklicht sein durch eine Verwendung eines voranstehend beschriebenen Lichtleiters in Verbindung mit zwei Lichtquellen zur Erfüllung mindestens einer Lichtfunktion unter selektiver Ausleuchtung des Lichtleiters in Abhängigkeit davon, welche Lichtquelle Licht abstrahlt, oder durch eine Verwendung eines voranstehend beschriebenen Lichtleiters in Verbindung mit einem richtungs- und/oder ortsabhängigen Helligkeitssensor.

Demnach sind Verwendungsansprüche Gegenstand der Erfindung, welche den voranstehend beschriebenen Lichtleiter zur Verwendung in Verbindung mit zwei Lichtquellen zur Erfüllung mindestens einer Lichtfunktion oder zur Verwendung in Verbindung mit einem richtungs- und/oder ortsabhängigen Helligkeitssensor vorsehen.

Die Erfindung schafft damit eine gänzlich neue Art von Lichtleitern sowie verschiedenen Verfahren zu deren Verwendung.

Beim Stand der Technik mit Lichteinkopplung von gegenüberliegenden Seiten her stehen die Lichtauskoppelstrukturen immer senkrecht auf dem Pfad des sich im Lichtleiter ausbreitenden Lichts, was trotz Optimierung für eine der beiden gegenläufigen Lichtausbreitungsrichtungen immer zu einer Teilauskopplung führt.

Indem bei der Erfindung durch die Lichtauskoppelstrukturen nicht Licht umgelenkt wird, das sich aus um 180° gegeneinander versetzten Richtungen im Lichtleiter ausbreitet, sondern die Lichtauskoppelstrukturen zur Umlenkung von Licht ausgelegt werden können, das sich aus um 90° gegeneinander versetzten Richtungen einmal rechtsdrehend und einmal linksdrehend im Lichtleiter ausbreitet, kann sichergestellt werden, dass die für das Licht, welches sich rechtsdrehend im Lichtleiter ausbreitet vorgesehenen Lichtauskoppelstrukturen keinen Einfluss auf das Licht haben, welches sich linksdrehend im Lichtleiter ausbreitet. Dasselbe gilt umgekehrt.

Der Lichtleiter und/oder das Leuchtelement können einzelne oder eine Kombination der zuvor und/oder nachfolgend in Verbindung mit dem Verfahren beschriebenen Merkmale aufweisen, ebenso wie das Verfahren einzelne oder eine Kombination mehrerer zuvor und/oder nachfolgend in Verbindung mit dem Lichtleiter und/oder dem Leuchtelement beschriebene Merkmale aufweisen und/oder verwirklichen kann.

Der Lichtleiter und/oder das Leuchtelement und/oder das Verfahren können alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Gegenüber einer alternativen Gestaltung einer dynamischen FRA nach dem Stand der Technik mit mehreren Lichtleitern oder verteilten Lichtquellen besitzt die vorgeschlagene Lösung durch die Verwendung nur eines Lichtleiters oder nur weniger abschnittsweise angeordneter Lichtleiter statt vieler LEDs mit jeweils eigenen Optiken die Vorteile:
- einer Bauraumeinsparung einhergehend mit einer Kosteneinsparung durch weniger benötigte Bauteile,
- einem deutlich kleineren Leiterbahnträger im Vergleich zu einem Leiterbahnträger wie etwa einer Platine oder dergleichen für viele in einem Leuchteninnenraum verteilt angeordnete LEDs, ebenfalls einhergehend mit einer entsprechenden Kosteneinsparung,
- einem Bedarf an wenigen, lichtstarken LEDs anstatt vieler lichtschwacher LEDs, einhergehend mit einer Verringerung der Anzahl der benötigten Bauteile und ebenfalls einhergehend mit einer entsprechenden Kosteneinsparung durch weniger Bauteile.

Gegenüber einer herkömmlichen Gestaltung eines Lichtleiters, der zwei Lichtfunktionen in sich vereint, besitzt die vorgeschlagene Lösung folgende Vorteile:
- Es sind weniger lichtstarke LEDs erforderlich, weil die Winkelverteilung des abgestrahlten Lichts für jede Lichtfunktion separat festgelegt werden kann. Daher Kosten- und Energieeinsparung.
   Zudem bieten sich neue Gestaltungsmöglichkeiten. Zum Beispiel ein Lichtleiter in einer Reflektorschale, der getrennt schaltbar direkt abstrahlt oder über den Reflektor. Solche oder ähnliche Lösungen bieten Potential für sehr kompakt gebaute Leuchten.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: ein erstes Ausführungsbeispiel eines Lichtleiters in einer Draufsicht in Fig. 1 a), in einer Vorderansicht in Fig. 1 b) orthogonal zu der Draufsicht in Fig. 1 a), und in einer Seitenansicht in Fig. 1 c) orthogonal zu der Draufsicht in Fig. 1 a) und orthogonal zu der Vorderansicht in Fig. 1 b).
- Fig. 2: ein zweites Ausführungsbeispiel eines Lichtleiters in einer Draufsicht in Fig. 2 a) und in einer Vorderansicht in Fig. 2 b) orthogonal zu der Draufsicht in Fig. 2 a).
- Fig. 3: ein drittes Ausführungsbeispiel eines Lichtleiters in einer Draufsicht in Fig. 3 a), in einer Vorderansicht in Fig. 3 b) orthogonal zu der Draufsicht in Fig. 3 a), und in einer Seitenansicht in Fig. 3 c) orthogonal zu der Draufsicht in Fig. 3 a) und orthogonal zu der Vorderansicht in Fig. 3 b).
- Fig. 4: ein viertes Ausführungsbeispiel eines Lichtleiters in einer Draufsicht in Fig. 4 a), in einer Vorderansicht in Fig. 4 b) orthogonal zu der Draufsicht in Fig. 4 a), und in einer Seitenansicht in Fig. 4 c) orthogonal zu der Draufsicht in Fig. 4 a) und orthogonal zu der Vorderansicht in Fig. 4 b).
- Fig. 5: ein fünftes Ausführungsbeispiel eines Lichtleiters in einer Draufsicht in Fig. 5 a) und in einer Vorderansicht in Fig. 5 b) orthogonal zu der Draufsicht in Fig. 5 a).
- Fig. 6: ein sechstes Ausführungsbeispiel eines Lichtleiters in einer Draufsicht in Fig. 6 a) und in einer Vorderansicht in Fig. 6 b) orthogonal zu der Draufsicht in Fig. 6 a).

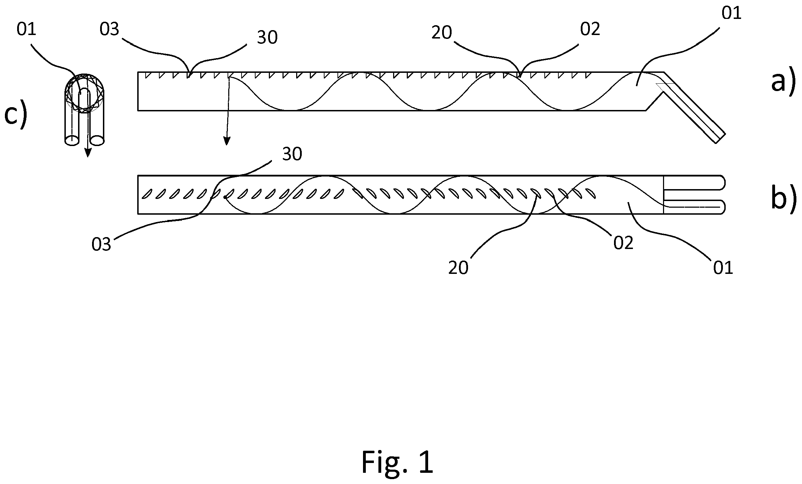

Ein in Fig. 1, Fig. 2, Fig. 3, Fig. 4, Fig. 5, Fig. 6 ganz oder in Teilen dargestellter Lichtleiter 01 umfasst:
- erste Lichtumlenkstrukturen 02 und
- zweite Lichtumlenkstrukturen 03
   für sich in unterschiedlichen Richtungen im Inneren des Lichtleiters 01 ausbreitendes, in Fig. 1, Fig. 2, Fig. 5, Fig. 6 durch gestrichelte Linien und Pfeile für ausgewählte Lichtstrahlen angedeutetes Licht.

Die ersten Lichtumlenkstrukturen 02 sind für sich tangential am Innenumfang des Lichtleiters 01 rechtsdrehend schraubenförmig ausbreitendes Licht und die zweiten Lichtumlenkstrukturen 03 sind für sich tangential am Innenumfang des Lichtleiters linksdrehend schraubenförmig ausbreitendes Licht ausgebildet, so dass sich das im Lichtleiter ausbreitende, den unterschiedlichen Lichtumlenkstrukturen 02, 03 zugedachte Licht kreuzt. Die für das sich in der einen Richtung drehend schraubenförmig ausbreitende Licht ausgebildeten Lichtumlenkstrukturen 02, 03 stehen parallel zum sich in der anderen Richtung drehend schraubenförmig ausbreitenden Licht.

Das sich im Lichtleiter 01 ausbreitende, den unterschiedlichen, beispielsweise Lichtein- oder Lichtauskoppelstrukturen 20, 30 umfassenden Lichtumlenkstrukturen 02, 03 zugedachte Licht, nämlich das sich schraubenförmig rechtsdrehend im Lichtleiter 01 ausbreitende Licht und das sich schraubenförmig linkssdrehend im Lichtleiter 01 ausbreitende Licht, kreuzt sich wenigstens im Bereich der Lichtumlenkstrukturen 02, 03 vorzugsweise zumindest annähernd rechtwinklig.

Der Lichtleiter 01 weist bevorzugt einen einfach zusammenhängenden Querschnitt auf.

Der Lichtleiter 01 verfügt vorzugsweise über einen Querschnitt in Form einer geschlossenen, ovalen Kurve. Beispiele hierfür sind ein elliptischer oder ein kreisförmiger Querschnitt.

Besonders bevorzugt weist der Lichtleiter 01 zumindest annähernd rotationssymmetrischen Querschnitt auf.

Der Lichtleiter 01 kann beispielsweise elliptischen Querschnitt, oder als Spezialform hiervon runden Querschnitt aufweisen. Er kann alternativ einen annähernd rotationssymmetrischen Querschnitt aufweisen, beispielsweise eine achteckige Querschnittsform, vorzugsweise mit abgerundeten Übergängen zwischen den geraden Kanten beispielsweise des Achtecks.

Vorzugsweise ist der Lichtleiter 01 stabförmig.

Die Stabförmigkeit des Lichtleiters 01 zeichnet sich durch eine größere Erstreckung entlang seiner Mittelachse im Vergleich zu einer Erstreckung normal hierzu aus.

Die Mittelachse ist gebildet durch eine Aneinanderreihung von Mittelpunkten lokaler Querschnitte des Lichtleiters 01. An jedem dieser Mittelpunkte weist der Lichtleiter 01 bevorzugt einen einfach zusammenhängenden Querschnitt auf.

Jeder Mittelpunkt kann dabei definiert sein als ein Schwerpunkt einer vom jeweiligen lokalen Querschnitt umgebenen beziehungsweise umhüllten, lokalen Querschnittsfläche.

Die Mittelachse kann dabei beispielsweise definiert sein als stetige mathematische Kurve, auf der die Schwerpunkte aller aufeinander folgender Querschnittsflächen des Lichtleiters 01 liegen. Die Mittelachse steht dabei jeweils lokal zur jeweiligen Querschnittsfläche gesehen normal auf den Querschnittsflächen auf.

Der Ausschluss einer Unstetigkeit einer die Mittelachse abbildenden mathematischen Kurve soll sicherstellen, dass der Lichtleiter 01 in aufeinander folgenden Querschnitten und/oder Abschnitten bzw. Bereichen, keine verschiedenen und nicht ineinander mündende Mittelachsen aufweist.

Eine durch sämtliche entlang der Mittelachse des Lichtleiters aufeinander folgende Querschnitte gebildete Hüllfläche des Lichtleiters kann durch eine Kurvenschar beschrieben werden, wobei jede Kurve der Kurvenschar selbst eine stetige mathematische Kurve ist.

Der Lichtleiter kann - beispielsweise entlang seiner Mittelachse gesehen - gerade oder zwei- oder dreidimensional gekrümmt verlaufen.

Jeder Querschnitt des Lichtleiters entlang der Mittelachse kann vorteilhaft durch eine vorzugsweise stetige, geschlossen umlaufende, mathematische Kurve beschrieben werden.

Bei den Lichtumlenkstrukturen 02, 03 kann es sich um Lichtauskoppelstrukturen 20, 30 handeln.

Vorstellbar ist auch der umgekehrte Lichtweg, bei dem der Lichtleiter 01 in Verbindung mit einem richtungs- oder ortsabhängigen Helligkeitssensor Verwendung findet beziehungsweise in Verbindung mit entsprechenden an ihm angeordneten Sensoren als richtungs- oder ortsabhängiger Helligkeitssensor dient. Hierbei wird auf den Lichtleiter 01 einfallendes Licht je nach Einfallsort und/oder Richtung durch beispielsweise als Prismen ausgebildete Lichteinkoppelstrukturen im Lichtleiter 01 schraubenförmig in den Lichtleiter 01 eingekoppelt. An dessen Ende sitzen zwei lichtempfindliche Sensoren, die durch ihre tangentiale Anbindung jeweils nur Licht einer Umlaufrichtung detektieren.

Auch eine Kombination von einem Sensor und einer Lichtquelle ist möglich, bei der die Lichtabstrahlrichtung oder der Abstrahlort getrennt von der Empfangsrichtung oder der Empfindlichkeit entlang des Lichtleiters 01 gestaltet werden kann.

Bei den Lichtumlenkstrukturen 02, 03 kann es sich demnach alternativ oder zusätzlich um Lichteinkoppelstrukturen handeln.

Mit als Lichteinkoppelstrukturen ausgebildeten Lichtumlenkstrukturen 02, 03 kann der Lichtleiter 01 beispielsweise für einen richtungsabhängigen Helligkeitssensor verwendet werden.

Mit als Lichtauskoppelstrukturen 20, 30 ausgebildeten Lichtumlenkstrukturen 02, 03 kann der Lichtleiter 01 beispielsweise Verwendung finden in Verbindung mit einem den Lichtleiter 01 und wenigstens zwei Lichtquellen umfassenden Leuchtelement.

Die Lichtquellen speisen das von ihnen abgestrahlte Licht an einer ein Ende des Lichtleiters 01 umfassenden Lichtleiterseite mit entgegengesetzter Helixdrehrichtung des von unterschiedlichen Lichtquellen abgestrahlten Lichts in den Lichtleiter 01 ein.

Die Einspeisung des Lichts der Lichtquellen erfolgt im Querschnitt des Lichtleiters 01 betrachtet tangential und im Längsschnitt des Lichtleiters betrachtet unter entgegengesetzten Winkeln.

Dadurch ergibt sich für das von der einen Lichtquelle in den Lichtleiter eingekoppelte Licht eine rechtsdrehende Ausbreitung im Lichtleiter 01 und für das Licht der anderen Lichtquelle eine linksdrehende Ausbreitung im Lichtleiter 01.

Vorteilhaft ergänzen sich die beiden entgegengesetzten Winkel zu einem Gesamtwinkel von 90°. Hierdurch läuft das Licht beider Lichtquellen im Innern des Lichtleiters stets senkrecht zueinander.

Damit können gezielt Lichtauskoppelstrukturen 20, 30 entlang des Lichtleiters 01 angeordnet werden, die jeweils nur für das Licht einer der Lichtquellen wirksam sind, weil das Licht nur einer der beiden Lichtquellen jeweils senkrecht auf die für dessen Lichtausbreitungshelix ausgelegten Lichtauskoppelstrukturen 20, 30 fällt, wohingegen die für das Licht der jeweils anderen Lichtquelle vorgesehenen Lichtauskoppelstrukturen 30, 20 parallel zur Lichtausbreitung der jeweils einen Lichtquelle stehen beziehungsweise angeordnet sind.

Die Einspeisung des Lichts der Lichtquellen vom selben Ende des Lichtleiters 01 her kann windschief zu einer beispielsweise eine Mittelachse des Lichtleiters 01 umfassenden Längsachse im Längsschnitt des Lichtleiters betrachtet unter dem Betrage nach gleichen, jedoch dem Vorzeichen nach entgegengesetzten Winkeln beispielsweise in Bezug auf die Mittelachse und/oder eine Projektion der Mittelachse erfolgen.

Beispielsweise kann die Einspeisung des Lichts einer ersten Lichtquelle im Längsschnitt des Lichtleiters 01 betrachtet unter einem Winkel von + 45° und die Einspeisung des Lichts einer zweiten Lichtquelle im Längsschnitt des Lichtleiters 01 betrachtet unter einem Winkel von - 45° vom selben Ende des Lichtleiters 01 her erfolgen.

Die Einspeisung des Lichts der Lichtquellen erfolgt im Querschnitt des Lichtleiters 01 betrachtet tangential und im Längsschnitt des Lichtleiters 01 betrachtet in einem Winkel von 45°. Dadurch läuft das eingespeiste Licht helixial, auch schraubenförmig oder wendelförmig genannt, mit einer Steigung von 45° den Lichtleiter entlang. Beide Lichtquellen speisen ihr Licht an einer ein Ende des Lichtleiters 01 umfassenden Lichtleiterseite mit entgegengesetzter Helixdrehrichtung in den Lichtleiter 01 ein.

Das Licht beider Lichtquellen 01 läuft im Innern des Lichtleiters 01 stets senkrecht zueinander.

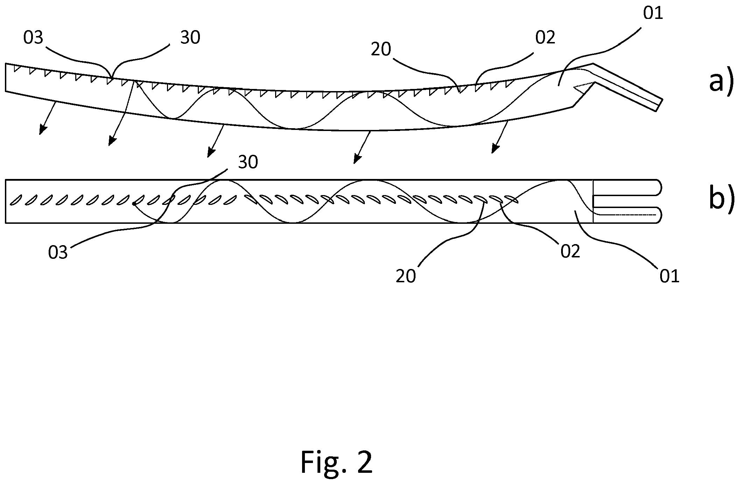

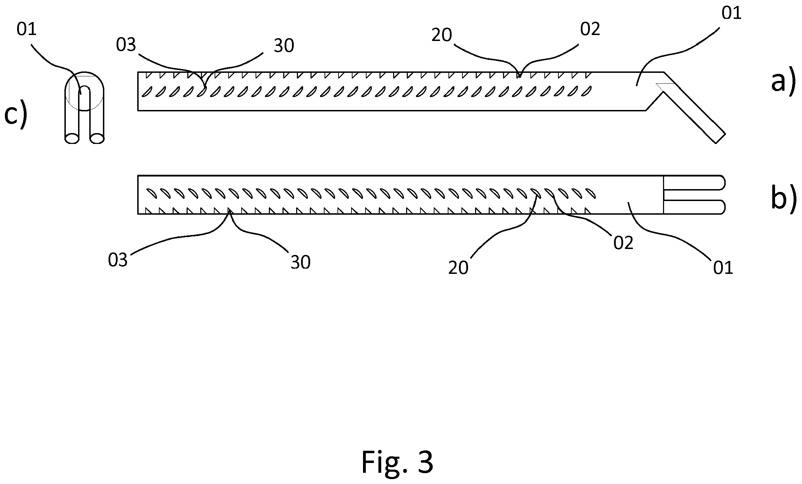

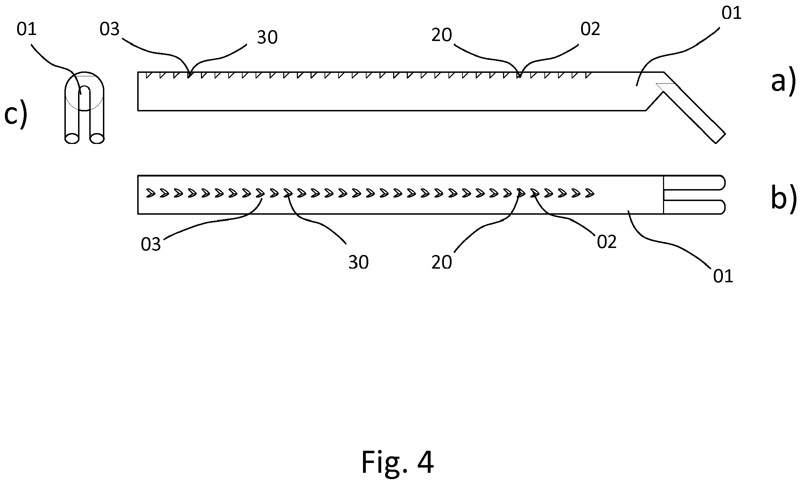

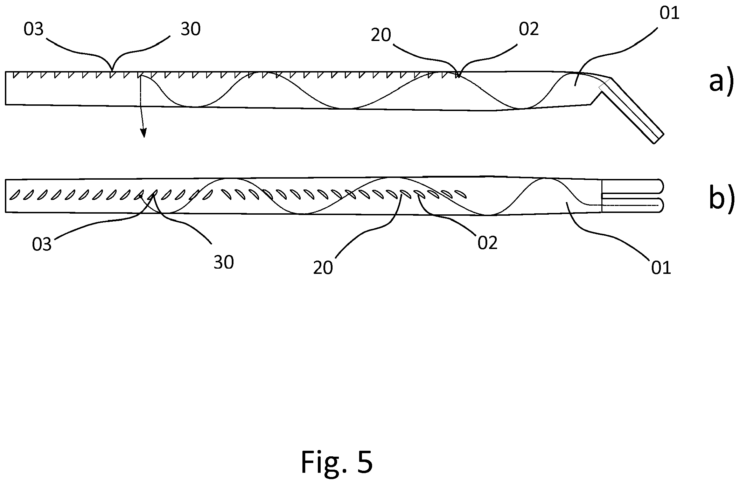

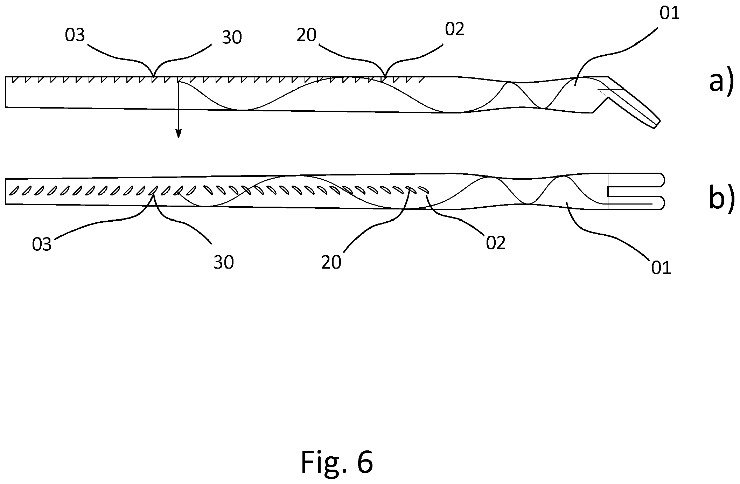

Der Lichtleiter 01 besitzt vorteilhaft Lichtauskoppelstrukturen 20, 30, wie etwa Auskoppelprismen und/oder -keile, an einer einem Betrachter von Fig. 1 b), Fig. 2 b), Fig. 3 b), Fig. 4 b), Fig. 5 b), Fig. 6 b) abgewandten, und in Fig. 1 a), Fig. 2 a), Fig. 3 a), Fig. 4 a), Fig. 5 a), Fig. 6 a) oben liegenden Lichtleiterrückseite besitzt, die jeweils auf eine der beiden Helixrichtungen abgestimmt sind. Das senkrecht dazu laufende Licht wird von diesen Strukturen nicht oder nur in sehr geringem Umfang ausgekoppelt. Auch der helixiale Verlauf wird nur wenig gestört. Somit lässt sich die Stärke, Richtung und lokale Verteilung der Lichtauskopplung für beide unabhängig voneinander ihr Licht in den Lichtleiter 01 einspeisenden Lichtquellen weitgehend getrennt festlegen.

Bei den Lichtquellen handelt es sich bevorzugt um LEDs.

Eine besonders bevorzugte Ausgestaltung der Erfindung umfasst demnach einen Rund-Lichtleiter, der einseitig von mindestens zwei LEDs oder beidseitig von je zwei LEDs gespeist wird. Die Einspeisung des Lichts der LEDs erfolgt dabei im Querschnitt des Lichtleiters 01 betrachtet tangential und im Längsschnitt des Lichtleiters 01 betrachtet unter einem Winkel, beispielsweise in einem Winkel von 45°. Dadurch läuft das eingespeiste Licht helixial mit einer Steigung von beispielsweise 45° den Lichtleiter 01 entlang. Beide LEDs an einer Lichtleiterseite speisen ihr Licht mit entgegengesetzter Helixdrehrichtung in den Lichtleiter 01 ein. Das Licht beider LEDs kreuzt sich im Inneren des Lichtleiters 01 stets. Beispielsweise läuft das Licht beider LEDs im Innern des Lichtleiters 01 stets senkrecht zueinander.

Der Lichtleiter 01 besitzt Lichtauskoppelstrukturen 20, 30, wie etwa vorteilhaft an der Lichtleiterrückseite angeordnete Auskoppelprismen und/oder -keile, die jeweils auf eine der beiden Helixrichtungen abgestimmt sind. Das senkrecht dazu laufende Licht wird von diesen Strukturen nicht oder nur in sehr geringem Umfang ausgekoppelt. Auch der helixiale Verlauf wird nur wenig gestört. Somit lässt sich die Stärke, Richtung und lokale Verteilung der Lichtauskopplung für beide einspeisenden LEDs weitgehend getrennt festlegen.

Eine vorteilhafte Weiterbildung benutzt die Richtung der Lichteinspeisung, insbesondere hinsichtlich der Drehrichtung der Helix und/oder der Ganghöhe, um mit unterschiedlichen Lichtquellen, vorzugsweise LEDs, in verschiedene Richtungen zu leuchten. Die auch als Auskoppeloptiken bezeichenbaren Lichtauskoppelstrukturen 20, 30 wirken hier auf das Licht mehrerer Lichtquellen, jedoch wird beispielsweise axial eingekoppeltes Licht beispielsweise von einer Vorderseite des Lichtleiters 01 aus gesehen horizontal abgestrahlt und helixial eingestrahltes Licht je nach Drehrichtung nach oben oder unten.

Auf die erwähnten unterschiedlichen Ausgestaltungen und Verwendungen in Verbindung mit einem Leuchtelement wird nachfolgend eingegangen.

Die Skizze in Fig. 1 zeigt die Funktionsweise einer selektiven Ausleuchtung des in Fig. 1 a) in einer Draufsicht, in Fig. 1 b) in einer um 90° gegenüber der Draufsicht in Fig. 1 a) gedrehten Vorderansicht und in Fig. 1 c) in einer sowohl gegenüber der Draufsicht in Fig. 1 a), als auch gegenüber der Vorderansicht in Fig. 1 b) um 90° gedrehten Seitenansicht dargestellten Lichtleiters 01.

Der in Fig. 1 dargestellte Lichtleiter 01 wird wie nachfolgend beschrieben abschnittsweise geschaltet.

An der Zuführung auf der rechten Seite in Fig. 1 a) wird mit zwei getrennt ansteuerbaren LEDs als Lichtquellen Licht in den Lichtleiter eingespeist. Dieses Licht durchläuft den Lichtleiter schraubenförmig mit entgegengesetztem Umlaufsinn. Ein Lichtstrahl ist beispielhaft als gestrichelte Linie eingezeichnet. Wie auf dem unteren Bild zu sehen, interagiert das Licht jeder LED nur mit den Auskoppeloptiken im Lichtleiter, deren aktive Fläche quer zum Verlauf des Lichts angeordnet ist

Die Skizze in Fig. 2 zeigt die Funktionsweise einer konstanten Auskoppelrichtung des in Fig. 2 a) in einer Draufsicht und in Fig. 2 b) in einer um 90° gegenüber der Draufsicht in Fig. 2 a) gedrehten Vorderansicht dargestellten, gebogenen Lichtleiters 01.

Der in Fig. 2 dargestellte, gebogene Lichtleiter 01 mit konstanter Auskoppelrichtung funktioniert wie nachfolgend beschrieben.

An der Zuführung auf der rechten Seite in Fig. 2 a) wird mit zwei getrennt ansteuerbaren LEDs als Lichtquellen Licht in den Lichtleiter eingespeist. Gegenüber dem in Fig. 1 dargestellten Fall, wird das Licht in einer steileren Schraubenbahn in den Lichtleiter eingespeist und die Auskoppeloptiken stehen am Anfang des Lichtleiters stärker in Richtung der Lichtleiterachse gedreht. Dadurch wird auch bei der steileren Schraubenbahn sichergestellt, dass jeweils Licht einer LED nur minimal mit den Auskoppeloptiken für das Licht der anderen LED interagiert. Gleichzeitig wird das ausgekoppelte Licht stärker in Vorwärtsrichtung ausgekoppelt. Um die Auskoppelrichtung über den gebogenen Verlauf des Lichtleiters Konstant zu halten (Pfeile im Bild), verjüngt sich der Lichtleiter kontinuierlich. Entsprechend angepasst wird die Richtung der Auskoppeloptiken gedreht.

Die Skizze in Fig. 3 zeigt die Funktionsweise einer Abhängigkeit der Auskoppelrichtung von der eingeschalteten LED des in Fig. 3 a) in einer Draufsicht, in Fig. 3 b) in einer um 90° gegenüber der Draufsicht in Fig. 3 a) gedrehten Vorderansicht und in Fig. 3 c) in einer sowohl gegenüber der Draufsicht in Fig. 3 a), als auch gegenüber der Vorderansicht in Fig. 3 b) um 90° gedrehten Seitenansicht dargestellten Lichtleiters 01.

Bei dem in Fig. 3 gezeigten Lichtleiter 01 ist die Auskoppelrichtung wie nachfolgend beschrieben von der eingeschalteten LED abhängig.

An der Zuführung auf der rechten Seite in Fig. 3 a) wird mit zwei getrennt ansteuerbaren LEDs als Lichtquellen Licht in den Lichtleiter eingespeist. Dieses Licht durchläuft den Lichtleiter schraubenförmig mit entgegengesetztem Umlaufsinn. Der Lichtleiter besitzt separate Auskoppeloptiken für jede der beiden Umlaufrichtungen, die hier an unterschiedlichen Seiten des Lichtleiters angeordnet sind. Je nach dem, welche LED aktiviert ist, strahlt der Lichtleiter Licht zu einer anderen Richtung ab.

Die Skizze in Fig. 4 zeigt die Funktionsweise einer Abhängigkeit der ausgesendete Lichtstärkeverteilung von der eingeschalteten LED des in Fig. 4 a) in einer Draufsicht, in Fig. 4 b) in einer um 90° gegenüber der Draufsicht in Fig. 4 a) gedrehten Vorderansicht und in Fig. 4 c) in einer sowohl gegenüber der Draufsicht in Fig. 4 a), als auch gegenüber der Vorderansicht in Fig. 4 b) um 90° gedrehten Seitenansicht dargestellten Lichtleiters 01.

Bei dem in Fig. 4 gezeigten Lichtleiter 01 ist die ausgesendete Lichtstärkeverteilung wie nachfolgend beschrieben von der eingeschalteten LED abhängig.

An der Zuführung auf der rechten Seite in Fig. 4 a) wird mit zwei getrennt ansteuerbaren LEDs als Lichtquellen Licht in den Lichtleiter eingespeist. Dieses Licht durchläuft den Lichtleiter schraubenförmig mit entgegengesetztem Umlaufsinn. Der Lichtleiter besitzt Auskoppeloptiken, die jeweils einen eigenen Bereich für jede der beiden Umlaufrichtungen besitzen. Die beiden Bereiche sind unterschiedlich gestaltet, so dass sich die Art der Lichtabstrahlung in Abhängigkeit von der eingeschalteten LED ändert. Selbstverständlich ist es möglich beide LEDs gemeinsam zu aktivieren, um eine kombinierte Abstrahlcharakteristik zu erhalten.

Die Skizze in Fig. 5 zeigt die Funktionsweise einer selektiven Ausleuchtung des in Fig. 5 a) in einer Draufsicht und in Fig. 5 b) in einer um 90° gegenüber der Draufsicht in Fig. 5 a) gedrehten Vorderansicht dargestellten Lichtleiters 01, dessen Durchmesser zum Ende des Lichtleiters 01 hin enger wird.

Der in Fig. 5 dargestellte Lichtleiter 01, dessen Durchmesser zum Ende des Lichtleiters 01 hin enger wird, wird wie nachfolgend beschrieben abschnittsweise geschaltet.

Die Lichtzuführung findet bei dem in Fig. 5 dargestellten Lichtleiter 01 in einen Bereich statt, an dem der Lichtleiterdurchmesser kleiner ist als am Anfang des Auskoppelbereichs. Zwischen Lichtzuführung und Auskoppelbereich weitet sich der Lichtleiter zunächst auf und streckt damit die Schraubenbahn, die das Licht im Innern des Lichtleiters beschreibt. Dieser Aufbau stellt sicher, dass das in den Auskoppelbereich einlaufende Licht über den gesamten Auskoppelbereich trotz der enger werdenden schraubenförmigen Bahn immer im Bereich der Totalreflexion bleibt und nicht tangential aus dem Lichtleiter austritt, sofern es keine Auskoppeloptik trifft.

Die Skizze in Fig. 6 zeigt die Funktionsweise einer selektiven Ausleuchtung des in Fig. 6 a) in einer Draufsicht und in Fig. 6 b) in einer um 90° gegenüber der Draufsicht in Fig. 6 a) gedrehten Vorderansicht dargestellten Lichtleiters 01, dessen Durchmesser zum Ende des Lichtleiters 01 hin enger wird.

Der in Fig. 6 dargestellte Lichtleiter 01, dessen Durchmesser zum Ende des Lichtleiters 01 hin enger wird, wird wie nachfolgend beschrieben abschnittsweise geschaltet.

Zwischen Lichtzuführung und Auskoppelbereich besitzt der in Fig. 6 dargestellte Lichtleiter eine Einengung. Vor der Einengung wird die Schraubenbahn des Lichts gestaucht, hinter der Einengung wieder gestreckt. Dadurch tritt Licht, das bei einer engen Schraubenbahn den Grenzwinkel der Totalreflexion unterschreitet an dieser Stelle aus und gelangt nicht mehr in den Auskoppelbereich des Lichtleiters. Dieser Aufbau stellt sicher, dass das in den Auskoppelbereich einlaufende Licht über den gesamten Auskoppelbereich trotz der enger werdenden schraubenförmigen Bahn immer im Bereich der Totalreflexion bleibt und nicht tangential aus dem Lichtleiter austritt, sofern es keine Auskoppeloptik trifft.

Die hier beschriebenen Lichtleiter 01 sind insbesondere Lichtleiter aus Kunststoff, wie etwa aus Polycarbonat (PC) oder Polymethylmethacrylat (PMMA), bei denen die Lichtleitung durch Totalreflexion an der Grenzfläche zu Luft erfolgt. Der Durchmesser der Lichtleiter liegt bei mehreren Millimetern, so dass sich ihre optische Wirkung strahlenoptisch beschreiben lässt. Diese Lichtleiter 01 werden zu Beleuchtungszwecken eingesetzt. Dazu wird das Licht an der Stirnseite eingespeist, im Innern des Lichtleiters geleitet und schließlich an Auskoppelstrukturen wie z.B. Prismen, Keile oder Mattierungen gezielt ausgekoppelt. Über die Form und Größe der Auskoppelstrukturen kann die Leuchtdichte und die Abstrahlrichtung des Lichtleiters beeinflusst werden. Oft wird eine Abstrahlung gewünscht, die überwiegend senkrecht zum Lichtleiter 01 gerichtet ist.

Ein solcher Lichtleiter kann von einer oder mehreren Lichtquellen einseitig oder von beiden Enden gespeist werden. Nach dem Stand der Technik leuchten alle Auskoppelstrukturen des Lichtleiters, wenn Licht eingespeist wird. Nach dem Stand der Technik ist ein getrenntes schalten räumlich getrennter Leuchtbereiche, insbesondere bei einseitiger Speisung, nicht möglich.

Die Erfindung ermöglicht auch bei einseitiger Speisung ein getrenntes Schalten verschiedener leuchtender Bereiche entlang des Lichtleiters 01. Dies wird dadurch erreicht, dass das Licht nicht wie beim Stand der Technik in Längsrichtung in den Lichtleiter 01 eingekoppelt wird, sondern so, dass es schraubenförmig den Lichtleiter 01 entlang läuft. Dies ermöglicht es, das Licht zweier Lichtquellen von derselben Seite des Lichtleiters 01, jedoch in entgegengesetzter Umlaufrichtung, nämlich linksdrehend und rechtsdrehend schraubenförmig, in den Lichtleiter 01 einzuspeisen. Die mittleren Ausbreitungsrichtungen des Lichts beider Lichtquellen verlaufen im Lichtleiter 01 dann vorteilhaft stets senkrecht zueinander. Die Einkoppelstruktur kann so gestaltet werden, dass beide einspeisenden LEDs auf einer gemeinsamen Platine platziert werden können.

In einem rotationssymmetrischen optischen System lässt sich eine Erhaltungsgröße definieren, die analog zur Drehimpulserhaltung in der klassischen Mechanik die Schiefe windschiefer Strahlen beschreibt. Wie bei vielen Erhaltungsgrößen, bleibt auch diese Erhaltungsgröße bei kleinen Abweichungen von der Rotationssymmetrie in guter Näherung erhalten. Somit lässt sich die Erfindung nicht nur für zylinderförmige Lichtleiter umsetzen, sondern auch für Lichtleiter, die nicht exakt rotationssymmetrisch sind. Beispiele sind gebogene Lichtleiter oder Lichtleiter mit ovalem oder achteckigem Querschnitt.

Durch Auskoppeloptiken gebildete Lichtauskoppelstrukturen 20, 30, wie etwa in den Lichtleiter 01 eingebrachte Prismen, die darauf optimiert sind, das Licht der einen ersten Umlaufrichtung in gewünschter Weise auszukoppeln, verlaufen damit im Wesentlichen parallel zur Ausbreitungsrichtung des Lichts mit der entgegengesetzten zweiten Umlaufrichtung. Demnach wird das Licht mit der ersten Umlaufrichtung in gewünschter Weise aus dem Lichtleiter 01 ausgekoppelt, das Licht der zweiten Umlaufrichtung jedoch kaum beeinflusst. Es können also durch Auskoppeloptiken gebildete oder solche umfassende Lichtauskoppelstrukturen 20, 30 in den Lichtleiter eingebracht werden, die nur oder überwiegend Licht einer der beiden Umlaufrichtungen aus dem Lichtleiter 01 auskoppeln und das Licht der anderen Umlaufrichtung nur wenig beeinflussen.

Es ist auch möglich durch Auskoppeloptiken gebildete oder solche umfassende Lichtauskoppelstrukturen 20, 30 zu gestalten, die auf Licht beider Umlaufrichtung wirken. Auch bei solchen kombinierten Auskoppeloptiken, kann die Abstrahlrichtung oder die Stärke des abgestrahlten Lichts weitgehend getrennt für beide Umlaufrichtungen gestaltet werden.

Bei entsprechend gestalteten, durch Auskoppeloptiken gebildete oder solche umfassende Lichtauskoppelstrukturen 20, 30 kann dem Licht der einen Umlaufrichtung eine andere Abstrahlcharakteristik gegeben werden als dem Licht der anderen Umlaufrichtung.

Gehen die Abschnitte ineinander über, in denen das Licht der einen Umlaufrichtung und das Licht der anderen Umlaufrichtung aus dem Lichtleiter 01 ausgekoppelt wird, oder sind die Abschnitte gar deckungsgleich, so können mit nur einem Lichtleiter 01 beispielsweise unterschiedlichen Lichtfunktionen zugedachte Abstrahlcharakteristiken verwirklicht werden in Abhängigkeit davon, welche Lichtquelle ihr Licht in der entsprechenden Umlaufrichtung einkoppelt. Auch können gleichzeitig beide Abstrahlcharakteristiken genutzt werden, wenn beide Lichtquellen aktiv sind und entsprechend sowohl Licht in der einen Umlaufrichtung, als auch Licht in der anderen Umlaufrichtung eingekoppelt wird.

Das Licht der einen Umlaufrichtung und das Licht der anderen Umlaufrichtung kann beispielsweise an unterschiedlichen Stellen entlang des Lichtleiters 01 ausgekoppelt werden, unterschiedliche Leuchtdichteverteilungen aufweisen oder in unterschiedliche Richtungen abgestrahlt werden. Wenn die Lichtquellen, die das Licht rechts- bzw. linksdrehend schraubenförmig in den Lichtleiter 01 einspeisen, getrennt voneinander aktiviert werden können, können die beiden durch die Auskoppeloptiken festgelegten Abstrahlcharakteristiken jeweils getrennt oder auch gemeinsam aktiviert werden.

Darüber hinaus ist es auch vorstellbar, die Erfindung lediglich einzusetzen, um die durch Auskoppeloptiken gebildete oder solche umfassende Lichtauskoppelstrukturen 20, 30 anders als herkömmlich zu gestalten und dem Lichtleiter 01 damit ein anderes Erscheinungsbild zu geben. In diesem Fall müssen die beiden schraubenförmigen Vorzugsrichtungen des Lichts auch nicht im Wesentlichen senkrecht zueinander stehen.

Soll die Lichtabstrahlung nicht senkrecht zum Lichtleiter 01 erfolgen, so müssen die beispielsweise durch Auskoppeloptiken gebildete oder solche umfassende Lichtauskoppelstrukturen 20, 30 gedreht werden, damit das Licht weiterhin zentral aus dem Lichtleiter austritt und nicht etwa nur nahe der Lichtleiteroberkante oder nahe der Lichtleiterunterkante. Je stärker das Licht in Vorwärtsrichtung aus dem Lichtleiter austreten soll, desto kleiner wird der Winkel zwischen der Längsachse des Lichtleiters und dem Verlauf der auskoppelnden Optikfläche. Entgegengesetzt stehen die Prismen immer steiler zur Lichtleiterrichtung, je stärke rückwärtsgerichtet das Licht ausgekoppelt werden soll.

Damit weiterhin die beiden Umlaufrichtungen des Lichts möglichst unabhängig voneinander ausgekoppelt werden, ist es von Vorteil, die Ganghöhe der schraubenförmigen Lichtverläufe im Zusammenspiel mit den beispielsweise durch Auskoppeloptiken gebildete oder solche umfassende Lichtauskoppelstrukturen 20, 30 ebenfalls anzupassen, so dass das umlaufende Licht, das nicht ausgekoppelt werden soll möglichst parallel zu den Auskoppeloptikflächen verläuft. Soll das Licht in Vorwärtsrichtung abgestrahlt werden, ist eine größere Ganghöhe sinnvoll. Der Winkel der Schraubenbahn zur Lichtleiterlängsachse ist damit kleiner als 45°. Entgegengesetzt ist eine eng gewendelte Schraubenbahn sinnvoll, wenn die Prismen steiler als 45° zur Lichtleiterachse gestellt werden, um Licht gegen die Lichtleiterrichtung auszukoppeln. Die Ganghöhe der Schraubenbahnen des Lichts beeinflusst wiederum die Richtung der beispielsweise durch Auskoppelprismen gebildete oder solche umfassende Lichtauskoppelstrukturen 20, 30.

Auch im Verlauf eines Lichtleiters 01 kann die Ganghöhe der Schraubenbahnen verändert werden. Wird der Lichtleiterdurchmesser entlang des Lichtleiterverlaufs stetig kleiner, verringert sich die Ganghöhe der Schraubenbahnen. Wächst der Durchmesser des Lichtleiters 01 entlang dessen Verlauf, so wird das Licht stärker in Vorwärtsrichtung gerichtet und die Ganghöhe der Schraubenbahn wächst. Durch anpassen des Lichtleiterdurchmessers ist es folglich möglich, einen Lichtleiter 01 zu gestalten, der entlang seines Verlaufs die Abstrahlrichtung ändert, wobei gleichzeitig Licht der nicht auszukoppelnden Umlaufrichtung immer so zu den Auskoppelflächen verläuft, dass es möglichst wenig gestört wird.

Eine denkbare Anwendung ist ein gebogener Lichtleiter 01, beispielsweise im Seitenwandteil einer als eine Heckleuchte ausgebildeten Fahrzeugleuchte, dessen Hauptabstrahlrichtung entlang seines Verlaufs stets in Richtung Fahrzeuglängsachse nach hinten weisen soll.

Auch zur Einkopplung des Lichts in den Lichtleiter kann ein konischer Lichtleiterbereich genutzt werden. So kann das Licht z.B. quer zur Lichtleiterrichtung in einen konischen Lichtleiterbereich eingespeist werden, der durch seine Form die wendelförmige Umlaufrichtung streckt. Alternativ kann in eine stark gestreckte Schraubenbahn eingespeist werden und die Ganghöhe durch einen konischen Lichtleiterbereich reduziert werden. Nimmt der Lichtleiterquerschnitt im Verlauf des Lichtleiters 01 ab, so ist es sinnvoll, den Einkoppelbereich auf den kleinsten Lichtleiterdurchmesser auszulegen, damit entlang des schmaler werdenden Lichtleiters 01 kein Lecklicht tangential ausgekoppelt wird (Fig. 5). Dies kann geschehen, wenn Licht durch die steiler werdende Schraubenbahn den Totalreflexionsgrenzwinkel unterschreitet. Wenn das Licht dagegen in einen Lichtleiterbereich eingespeist wird, der bereits den minimalen Lichtleiterdurchmesser besitzt und die Schraubenbahn anschließend über einen sich weitenden Lichtleiterquerschnitt gestreckt wird, ist sichergestellt, dass das Licht im weiteren Lichtleiterverlauf weiterhin die Bedingung für die Totalreflexion erfüllt, solang es mit keiner Auskoppeloptik interagiert. Derselbe Effekt lässt sich erreichen, wenn sich zwischen Einkoppelbereich und Auskoppelbereich des Lichtleiters 01 eine Engstelle befindet (Fig. 6). An dieser koppelt dann das Licht aus, das im weiteren Verlauf des Lichtleiters die Totalreflexionsbedingung unterschreiten würde.

Sowohl ein voranstehend beschriebener Lichtleiter 01 in Verbindung mit mindestens zwei ihr Licht in ihn einspeisenden Lichtquellen, als auch ein voranstehend beschriebenes Leuchtelement erlauben die Durchführung eines Verfahrens zur selektiven Ausleuchtung eines Lichtleiters 01 mit wenigstens zwei unabhängig voneinander ansteuerbaren, ihr Licht am selben Ende des Lichtleiters 01 in diesen einstrahlenden Lichtquellen.

Das Verfahren sieht zum unabhängigen Ausleuchten zweier Abschnitte des bevorzugt stabförmigen Lichtleiters 01 mit vorzugsweise zumindest annähernd rotationssymmetrischem Querschnitt von einem dessen gegenüberliegender Enden her, beispielsweise vor, dass zur Ausleuchtung eines ersten Abschnitts Licht einer an einem Ende angeordneten ersten Lichtquelle tangential und um einen ersten, negativen Winkel von beispielsweise - 45° gegenüber einer Längsachse des Lichtleiters 01 geneigt in den Lichtleiter 01 eingekoppelt wird, welches sich beispielsweise rechtsdrehend spiralförmig im Inneren des Lichtleiters 01 an dessen Innenumfang ausbreitet, und vermittels in dem ersten Abschnitt senkrecht zur Ausbreitungsrichtung diesen Lichts angeordneten Lichtauskoppelstrukturen 20 aus dem Lichtleiter 01 ausgekoppelt wird, und wobei zur Ausleuchtung eines zweiten Abschnitts Licht einer an dem selben Ende angeordneten zweiten Lichtquelle tangential und um einen dem ersten Winkel entgegengesetzten zweiten, positiven Winkel von beispielsweise + 45° gegenüber der Längsachse des Lichtleiters 01 geneigt in den Lichtleiter 01 eingekoppelt wird, welches sich beispielsweise linksdrehend spiralförmig im Inneren des Lichtleiters 01 an dessen Innenumfang ausbreitet, und vermittels in dem zweiten Abschnitt senkrecht zur Ausbreitungsrichtung diesen Lichts angeordneten Lichtauskoppelstrukturen 30 aus dem Lichtleiter 01 ausgekoppelt wird.

Dabei kreuzt sich das von den beiden Lichtquellen in den Lichtleiter eingekoppelte Licht im Inneren des Lichtleiters 01 senkrecht.

Damit sind die für das sich in der einen Richtung im Inneren des Lichtleiters ausbreitende Licht vorgesehenen Lichtauskoppelstrukturen 20, 30 parallel zur Ausbreitungsrichtung des sich in der anderen Richtung im Inneren des Lichtleiters 01 ausbreitenden Lichts angeordnet.

Das Verfahren sieht die selektive Ausleuchtung des Lichtleiters 01 in Abhängigkeit davon vor, von welcher Lichtquelle aus Licht in den Lichtleiter 01 eingespeist wird.

Durch Einspeisung von Licht der einen Lichtquelle wird der erste Abschnitt ausgeleuchtet. Dementsprechend kann eine erste Abstrahlcharakteristik des Lichtleiters 01 erhalten werden.

Durch Einspeisung von Licht der anderen Lichtquelle wird der zweite Abschnitt ausgeleuchtet. Dementsprechend kann eine zweite Abstrahlcharakteristik des Lichtleiters 01 erhalten werden.

Gehen die beiden Abschnitte des Lichtleiters ineinander über, können durch gezieltes Ausleuchten des Lichtleiters 01 innerhalb desjenigen Bereichs, in dem die Abschnitte ineinander übergehen, unterschiedliche Abstrahlcharakteristiken beispielsweise für unterschiedliche Lichtfunktionen erhalten werden. Außerhalb eines solchen Bereichs liegen selbstverständlich ebenso die unterschiedlichen Abstrahlcharakteristiken vor, jedoch erscheinen sie dort zusätzlich als unabhängig ausleuchtbare Abschnitte. Sind die beiden Abschnitte demgegenüber deckungsgleich, werden sie beide immer vollständig ausgeleuchtet, weisen dabei in Abhängigkeit davon, welche Lichtquelle gerade ihr Licht dementsprechend rechts- oder linksdrehend einspeist, unterschiedliche Abstrahlcharakteristiken auf.

Vorteilhaft sieht das Verfahren vor, dass sich die beiden entgegengesetzten Winkel zu einem Gesamtwinkel von 90° ergänzen. Mit anderen Worten beträgt der zwischen den beiden entgegengesetzten Winkeln eingeschlossene Winkel vorteilhaft 90°.

Beispielsweise beträgt der erste Winkel - 45° und der zweite Winkel + 45°.

Das Verfahren kann alternativ oder zusätzlich vorsehen, dass die selektive Ausleuchtung eine von einer Abstrahlcharakteristik des ersten Abschnitts verschiedene Abstrahlcharakteristik des zweiten Abschnitts umfasst.

Die Lichtauskoppelstrukturen 20, 30 des ersten und des zweiten Abschnitts können demnach alternativ für unterschiedliche Abstrahlcharakteristiken ausgelegt sein. Damit können mit nur einem Lichtleiter 01 wenigstens zwei Lichtfunktionen mit unterschiedlichen Abstrahlcharakteristiken verwirklicht werden.

Damit umfasst die selektive Ausleuchtung des Lichtleiters 01 unterschiedliche Lichtverteilungen besorgende, verschiedene Abstrahlcharakteristiken des ersten Abschnitts gegenüber dem zweiten Abschnitt.

Wichtig ist hervorzuheben, dass die beiden Abschnitte ineinander übergehen können, wie bereits voranstehende zu den unterschiedlichen in Fig. 1, Fig. 2, Fig. 3, Fig. 4, Fig. 5, Fig. 6 dargestellten Ausführungsbeispielen beschrieben.

Vorteilhaft finden punktförmige Lichtquellen Verwendung. Diese erlauben eine präzise Auslegung der Lichtauskoppelstrukturen. Idealerweise handelt es sich bei den punktförmigen Lichtquellen um LEDs.

Es ist ersichtlich, dass die Erfindung einen völlig neuartigen Ansatz verfolgt.

Bei einem Stablichtleiter wird Licht wenigstens zweier Lichtquellen von zumindest einem Ende her tangential und um 45° gegenüber der Längsachse geneigt eingeleitet, wobei das Licht der einen Lichtquelle an dem Ende um +45°, das Licht der zweiten Lichtquelle an dem selben Ende um -45° eingeleitet wird. Das Licht der zwei Lichtquellen breitet sich jeweils spiralförmig im Lichtleiter aus, wobei das von der einen Lichtquelle eingestrahlte Licht das von der anderen Lichtquelle eingestrahlte Licht immer in einem Winkel von 90° kreuzt.

Dadurch ergibt sich für das von der einen Lichtquelle in den Lichtleiter eingekoppelte Licht eine rechtsdrehende Ausbreitung im Lichtleiter und für das Licht der anderen Lichtquelle eine linksdrehende Ausbreitung im Lichtleiter.

Damit können gezielt Lichtauskoppelstrukturen entlang des Lichtleiters angeordnet werden, die jeweils nur für das Licht einer der Lichtquellen wirksam sind, weil das Licht nur einer der beiden Lichtquellen jeweils senkrecht auf die für dessen Lichtausbreitungshelix ausgelegten Lichtauskoppelstrukturen fällt, wohingegen die für das Licht der jeweils anderen Lichtquelle vorgesehenen Lichtauskoppelstrukturen parallel zur Lichtausbreitung der jeweils einen Lichtquelle stehen beziehungsweise angeordnet sind.

Ebenso ist ersichtlich, dass die Erfindung durch ein Leuchtelement mit zwei LEDs als Lichtquellen und mit einem von den beiden Lichtquellen gegenläufig helixial gespeisten Lichtleiter verwirklicht sein kann.

Darüber hinaus kann die Erfindung verwirklicht sein durch eine Verwendung eines voranstehend beschriebenen Lichtleiters in Verbindung mit zwei Lichtquellen zur Erfüllung mindestens einer Lichtfunktion unter selektiver Ausleuchtung des Lichtleiters in Abhängigkeit davon, welche Lichtquelle Licht abstrahlt, oder durch eine Verwendung eines voranstehend beschriebenen Lichtleiters in Verbindung mit einem richtungs- und/oder ortsabhängigen Helligkeitssensor.

Demnach sind Verwendungsansprüche Gegenstand der Erfindung, welche den voranstehend beschriebenen Lichtleiter zur Verwendung in Verbindung mit zwei Lichtquellen zur Erfüllung mindestens einer Lichtfunktion oder zur Verwendung in Verbindung mit einem richtungs- und/oder ortsabhängigen Helligkeitssensor vorsehen.

Die Erfindung schafft damit eine gänzlich neue Art von Lichtleitern sowie verschiedenen Verfahren zu deren Verwendung.

Beim Stand der Technik mit Lichteinkopplung von gegenüberliegenden Seiten her stehen die Lichtauskoppelstrukturen immer senkrecht auf dem Pfad des sich im Lichtleiter ausbreitenden Lichts, was trotz Optimierung für eine der beiden gegenläufigen Lichtausbreitungsrichtungen immer zu einer Teilauskopplung führt.

Indem bei der Erfindung durch die Lichtauskoppelstrukturen nicht Licht umgelenkt wird, das sich aus um 180° gegeneinander versetzten Richtungen im Lichtleiter ausbreitet, sondern die Lichtauskoppelstrukturen zur Umlenkung von Licht ausgelegt werden können, das sich aus um 90° gegeneinander versetzten Richtungen einmal rechtsdrehend und einmal linksdrehend im Lichtleiter ausbreitet, kann sichergestellt werden, dass die für das Licht, welches sich rechtsdrehend im Lichtleiter ausbreitet vorgesehenen Lichtauskoppelstrukturen keinen Einfluss auf das Licht haben, welches sich linksdrehend im Lichtleiter ausbreitet. Dasselbe gilt umgekehrt.

Vorteile gegenüber dem Stand der Technik sind nachfolgend ausgeführt.

Dadurch, dass im einseitig gespeisten Lichtleiter 01 sich zwei Auskoppelbereiche getrennt ansteuern lassen, lässt sich eine auch als so genannter wischender Blinker bezeichnete, dynamische FRA mit nur einem Lichtleiter 01 verwirklichen. Beispielsweise lassen sich mit je einseitiger Speisung im Heckdeckelteil und im Seitenwandteil einer Heckleuchte insgesamt vier nacheinander aktivierte Segmente verwirklichen, zwei im Lichtleiter im Heckdeckel, zwei im Lichtleiter in der Seitenwand. Mit je beidseitiger Speisung kann die Segmentanzahl auf bis zu insgesamt acht Segmente verdoppelt werden.

Eine weitere Einsatzmöglichkeit des helixial gespeisten Lichtleiters ist als Schlusslicht-Bremslicht-Kombination, bei der nur ein Teil des Schlusslichtlichtleiters bei Aktivierung des Bremslichts heller aufleuchtet. Dadurch ist es beispielsweise möglich, den gesetzlich geforderten Minimalabstand von 100 mm zwischen dem Nebelschlusslicht und dem Bremslicht einzuhalten, obwohl der Abstand zwischen Schlusslichtlichtleiter und Nebelschlusslicht teilweise geringer ist.

Bei ineinandergebautem Schlusslicht und Bremslicht können auch unterschiedliche Abstrahlcharakteristiken genutzt werden, so dass der Lichtleiter im Schlusslichtbetrieb eine breite Lichtverteilung erzeugt, die auf ein ansprechendes Erscheinungsbild ausgelegt ist. Im Bremslichtbetrieb wird die Abstrahlung des Lichtleiters jedoch wesentlich stärker gerichtet, um den Lichtstrom der Lichtquellen stärker an den gesetzlichen Anforderungen auszurichten und somit effizienter zu nutzen. Dieselbe Ausnutzung unterschiedlicher Abstrahlrichtungen wäre auch für ein Mehrpegelbremslicht oder einen Mehrpegelfahrtrichtungsanzeiger vorstellbar, das im höheren Pegel beispielsweise stärker gerichtet nach hinten leuchtet.

Eine weitere Nutzung eines Lichtleiters 01 mit zwei getrennt voneinander ansteuerbaren Abstrahlcharakteristiken besteht im Ineinanderbau zweier Lichtfunktionen mit stark unterschiedlichen gesetzliche Vorgaben bezüglich der Lichtstärkeverteilung. Ein Beispiel wäre ein Fahrtrichtungsanzeiger, der in einem Lichtleiter 01 mit dem Rückfahrscheinwerfer kombiniert ist.

Eine weitere Ausgestaltung nutzt ebenfalls eine unterschiedliche Abstrahlrichtung der beiden Lichtumlaufrichtungen im Lichtleiter 01. So kann der Lichtleiter 01 beispielsweise getrennt schaltbar Licht direkt in Richtung Betrachter abstrahlen oder indirekt über einen angrenzenden Reflektor. Zwei Lichtfunktionen lassen sich so nebeneinander platzieren, verwenden aber denselben Lichtleiter 01. Zum Beispiel wird das Schlusslicht von einem direktabstrahlenden horizontalen Lichtleiter 01 gebildet und der Reflektor des darüber angeordneten Bremslichts wird über denselben Lichtleiter beleuchtet. Eine solche zusätzliche indirekte Abstrahlung in einen Reflektor kann zum Beispiel sinnvoll sein, um die SAE-Mindestflächenanforderung für ein Bremslicht zu erfüllen. Beispielsweise reicht die Lichtleiterfläche alleine nicht für ein Bremslicht aus, mit dem über den Lichtleiter 01 beleuchteten Reflektor wird die notwendige Fläche jedoch erreicht. Die Verwendung desselben Lichtleiters 01 spart gegenüber eine Lösung mit mehreren Lichtleitern mindestens ein Bauteil ein. Gegenüber einer Lösung mit zusätzlichen LEDs, die in den Reflektor strahlen, werden Platinen und LEDs gespart. Insgesamt können Lichtleiter 01 und Reflektor nur mit der erfindungsgemäßen Lösung direkt aneinander Grenzen. Der Lichtleiter 01 kann sogar vor dem Reflektor verlaufen und diesen getrennt schaltbar anleuchten.

Auch für sogenannte Welcome-Animationen bietet der erfindungsgemäße Lichtleiter 01 vielfältige Möglichkeiten. Unterschiedliche Abstrahlrichtungen können hinter einer Streuscheibe verschiedene Bereiche der Streuscheibe beleuchten. Getrennt ansteuerbare Bereiche entlang des Lichtleiters oder unterschiedliche Leuchtdichteverteilungen entlang eines direktabstrahlenden Lichtleiters können ebenfalls zur Darstellung von Welcome-Animationen genutzt werden.

Weitere Einsatzmöglichkeiten des erfindungsgemäßen Lichtleiters 01 bestehen im Bereich der Fahrzeuginnenraumbeleuchtung. Ein Beispiel ist eine Leselampe mit getrennt schaltbarer Abstrahlrichtung, z.B. als in einem Lichtleiter 01 kombiniertes Licht für Fahrer und Beifahrer.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Lichtleiter
- 02: Lichtumlenkstruktur
- 03: Lichtumlenkstruktur

- 20: Lichtauskoppelstruktur

- 30: Lichtauskoppelstruktur

## Patentansprüche

1. Lichtleiter (01) mit ersten Lichtumlenkstrukturen (02) und mit zweiten Lichtumlenkstrukturen (03) für sich in unterschiedlichen Richtungen im Inneren des Lichtleiters (01) ausbreitendes Licht, wobei die ersten Lichtumlenkstrukturen (02) für sich tangential am Innenumfang des Lichtleiters (01) rechtsdrehend schraubenförmig ausbreitendes Licht und die zweiten Lichtumlenkstrukturen (03) für sich tangential am Innenumfang des Lichtleiters (01) linksdrehend schraubenförmig ausbreitendes Licht ausgebildet sind, so dass sich das im Lichtleiter (01) ausbreitende, den unterschiedlichen Lichtumlenkstrukturen (02, 03) zugedachte Licht kreuzt und die für das sich in der einen Richtung drehend schraubenförmig ausbreitende Licht ausgebildeten Lichtumlenkstrukturen (02, 03) zumindest parallel stehen zum sich in der anderen Richtung drehend schraubenförmig ausbreitenden Licht, so dass sichergestellt wird, dass die für das Licht, welches sich rechtsdrehend im Lichtleiter ausbreitet vorgesehenen Lichtauskoppelstrukturen keinen Einfluss auf das Licht haben, welches sich linksdrehend im Lichtleiter ausbreitet, und die für das Licht, welches sich linksdrehend im Lichtleiter ausbreitet vorgesehenen Lichtauskoppelstrukturen keinen Einfluss auf das Licht haben, welches sich rechtsdrehend im Lichtleiter ausbreitet.

2. Lichtleiter nach Anspruch 1, wobei sich das im Lichtleiter (01) ausbreitende, den unterschiedlichen Lichtumlenkstrukturen (02, 03) zugedachte Licht rechtwinklig kreuzt.

3. Lichtleiter nach Anspruch 1 oder 2, wobei er zumindest annähernd rotationssymmetrischen Querschnitt aufweist.

4. Lichtleiter nach Anspruch 1, 2 oder 3, wobei es sich bei den Lichtumlenkstrukturen (02, 03) um Lichteinkoppelstrukturen handelt.

5. Lichtleiter nach einem der Ansprüche 1, 2 oder 3, wobei es sich bei den Lichtumlenkstrukturen (02, 03) um Lichtauskoppelstrukturen (20, 30) handelt.

6. Leuchtelement mit wenigstens zwei Lichtquellen und einem Lichtleiter (01) nach Anspruch 5, in welchen die Lichtquellen das von ihnen abgestrahlte Licht mit entgegengesetzter Helixdrehrichtung einspeisen, wobei die Einspeisung des Lichts der Lichtquellen im Querschnitt des Lichtleiters (01) betrachtet tangential und im Längsschnitt des Lichtleiters (01) betrachtet unter entgegengesetzten Winkeln erfolgt.

7. Leuchtelement nach Anspruch 6, wobei die Einspeisung des Lichts der Lichtquellen vom selben Ende des Lichtleiters (01) her windschief zu einer Längsachse unter im Längsschnitt des Lichtleiters (01) betrachtet dem Vorzeichen nach entgegengesetzten Winkeln erfolgt.

8. Leuchtelement nach Anspruch 6 oder 7, wobei die Einspeisung des Lichts einer ersten Lichtquelle im Längsschnitt des Lichtleiters (01) betrachtet unter einem Winkel von + 45° und die Einspeisung des Lichts einer zweiten Lichtquelle im Längsschnitt des Lichtleiters (01) betrachtet unter einem Winkel von - 45° vom selben Ende des Lichtleiters (01) her erfolgt.

9. Leuchtelement nach Anspruch 6, 7 oder 8, wobei sich die beiden entgegengesetzten Winkel zu einem Gesamtwinkel von 90° ergänzen.

10. Leuchtelement nach einem der Ansprüche 6 bis 9, wobei der Lichtleiter Lichtauskoppelstrukturen an einer einem Betrachter abgewandten Lichtleiterrückseite besitzt, die jeweils auf eine der beiden Helixrichtungen abgestimmt sind.

11. Verfahren zur selektiven Ausleuchtung eines Lichtleiters (01) mit wenigstens zwei unabhängig voneinander ansteuerbaren, ihr Licht am selben Ende des Lichtleiters (01) in diesen einstrahlenden Lichtquellen, welches vorsieht, dass zur Ausleuchtung eines ersten Abschnitts Licht einer an einem Ende angeordneten ersten Lichtquelle tangential und um einen ersten, negativen Winkel gegenüber einer Längsachse des Lichtleiters (01) geneigt in den Lichtleiter (01) eingekoppelt wird, welches sich rechtsdrehend spiralförmig im Inneren des Lichtleiters (01) an dessen Innenumfang ausbreitet, und vermittels in dem ersten Abschnitt senkrecht zur Ausbreitungsrichtung diesen Lichts angeordneten Lichtauskoppelstrukturen (20) aus dem Lichtleiter (01) ausgekoppelt wird, und wobei zur Ausleuchtung eines zweiten Abschnitts Licht einer an dem selben Ende angeordneten zweiten Lichtquelle tangential und um einen zweiten, positiven Winkel gegenüber der Längsachse des Lichtleiters (01) geneigt in den Lichtleiter (01) eingekoppelt wird, welches sich linksdrehend spiralförmig im Inneren des Lichtleiters (01) an dessen Innenumfang ausbreitet, und vermittels in dem zweiten Abschnitt senkrecht zur Ausbreitungsrichtung diesen Lichts angeordneten Lichtauskoppelstrukturen (30) aus dem Lichtleiter (01) ausgekoppelt wird, wobei sich das von den beiden Lichtquellen in den Lichtleiter (01) eingekoppelte Licht im Inneren des Lichtleiters (01) kreuzt und die für das sich in der einen Richtung im Inneren des Lichtleiters (01) ausbreitende Licht vorgesehenen Lichtauskoppelstrukturen (20, 30) parallel zur Ausbreitungsrichtung des sich in der anderen Richtung im Inneren des Lichtleiters (01) ausbreitenden Lichts angeordnet sind, so dass sichergestellt wird, dass die für das Licht, welches sich rechtsdrehend im Lichtleiter ausbreitet vorgesehenen Lichtauskoppelstrukturen keinen Einfluss auf das Licht haben, welches sich linksdrehend im Lichtleiter ausbreitet, und die für das Licht, welches sich linksdrehend im Lichtleiter ausbreitet vorgesehenen Lichtauskoppelstrukturen keinen Einfluss auf das Licht haben, welches sich rechtsdrehend im Lichtleiter ausbreitet.

12. Verfahren nach Anspruch 11, wobei sich die beiden Winkel zu einem Gesamtwinkel von 90° ergänzen.

13. Verfahren nach Anspruch 11 oder 12, wobei der erste Winkel - 45° und der zweite Winkel + 45° beträgt.

14. Verfahren nach Anspruch 11, 12 oder 13, wobei die selektive Ausleuchtung eine von einer Abstrahlcharakteristik des ersten Abschnitts verschiedene Abstrahlcharakteristik des zweiten Abschnitts umfasst.

15. Verfahren nach einem der Ansprüche 11 bis 14, wobei die beiden Abschnitte ineinander übergehen.

## Claims

1. A light guide (01) with first light deflection structures (02) and with second light deflection structures (03) for light propagating in different directions inside the light guide (01), wherein the first light deflection structures (02) are designed for light propagating tangentially at the inner circumference of the light guide (01) in a right-hand helical manner, and the second light deflection structures (03) are designed for light propagating tangentially at the inner circumference of the light guide (01) in a left-hand helical manner, such that the light propagating in the light guide (01) and assigned to the different light deflection structures (02, 03) intersects, and the light deflection structures (02, 03) designed for the light propagating in a helical manner in the one direction are at least parallel to the light propagating in a helical manner in the other direction, such that it is ensured that the light outcoupling structures provided for the light propagating in the light guide in a right-hand helical manner have no influence on the light propagating in the light guide in a left-hand helical manner, and the light outcoupling structures provided for the light propagating in the light guide in a left-hand helical manner have no influence on the light propagating in the light guide in a right-hand helical manner.

2. The light guide according to claim 1, wherein the light propagating in the light guide (01) and assigned to the different light deflection structures (02, 03) intersects at right angles.

3. The light guide according to claim 1 or 2, wherein the light guide has an at least approximately rotationally symmetric cross section.

4. The light guide according to claim 1, 2, or 3, wherein the light deflection structures (02, 03) are light incoupling structures.

5. The light guide according to one of the claims 1, 2, or 3, wherein the light deflection structures (02, 03) are light outcoupling structures (20, 30).

6. A luminaire element with at least two light sources and a light guide (01) according to claim 5, into which luminaire element the light sources feed the light emitted from them with opposite helical direction, wherein the feed-in of the light from the light sources is performed tangentially as seen in cross section of the light guide (01) and at opposite angles as seen in longitudinal section of the light guide (01).

7. The luminaire element according to claim 6, wherein the feed-in of the light from the light sources from the same end of the light guide (01) is performed skewed in relation to a longitudinal axis at angles with opposite signs as seen in longitudinal section of the light guide (01).

8. The luminaire element according to claim 6 or 7, wherein the feed-in of the light from a first light source is performed at an angle of + 45° as seen in the longitudinal section of the light guide (01) and the feed-in of the light from a second light source is performed from the same end of the light guide (01) at an angle of - 45° as seen in the longitudinal section of the light guide (01).

9. The luminaire element according to claim 6, 7, or 8, wherein the two opposite angles add up to a total angle of 90°.

10. The luminaire element according to one of the claims 6 to 9, wherein the light guide has light outcoupling structures at one of the back sides of the light guide averted from the viewer, which light outcoupling structures are each coordinated to one of the two helical directions.

11. A method for the selective illumination of a light guide (01) with at least two individually actuable light sources irradiating their light into the light guide (01) at the same end of the light guide (01), which method provides that, in order to illuminate a first section, light from a first light source arranged at one end is coupled into the light guide (01) tangentially and inclined at a first, negative angle relative to a longitudinal axis of the light guide (01), with the light propagating in a right-hand helical manner inside the light guide (01) at the inner circumference thereof, and the light is coupled out from the light guide (01) by means of light outcoupling structures (20) arranged in the first section perpendicular to the propagation direction of this light, and wherein, to illuminate a second section, light from a second light source arranged at the same end is coupled into the light guide (01) tangentially and inclined at a second, positive angle relative to a longitudinal axis of the light guide (01), with the light propagating in a left-hand helical manner inside the light guide (01) at the inner circumference thereof, and the light is coupled out from the light guide (01) by means of light outcoupling structures (30) arranged in the second section perpendicular to the propagation direction of this light, wherein the light coupled into the light guide (01) from the two light sources intersects inside the light guide (01), and the light outcoupling structures (20, 30) provided for the light propagating inside the light guide (01) in the one direction are arranged parallel to the propagation direction of the light propagating inside the light guide (01) in the other direction, such that it is ensured that the light outcoupling structures provided for the light propagating in the light guide in a right-hand helical manner have no influence on the light propagating in the light guide in a left-hand helical manner, and the light outcoupling structures provided for the light propagating in the light guide in a left-hand helical manner have no influence on the light propagating in the light guide in a right-hand helical manner.

12. The method according to claim 11, wherein the two angles add up to a total angle of 90°.

13. The method according to claim 11 or 12, wherein the first angle is - 45° and the second angle is + 45°.

14. The method according to claim 11, 12, or 13, wherein the selective illumination comprises an emission characteristic of the second section that is different from an emission characteristic of the first section.

15. The method according to one of the claims 11 to 14, wherein the two sections merge into each other.

## Revendications

1. Conducteur de lumière (01) doté de premières structures de déviation de lumière (02) et de deuxièmes structures de déviation de lumière (03) pour de la lumière se propageant dans différentes directions à l'intérieur dudit conducteur de lumière (01), lesdites premières structures de déviation de lumière (02) étant constituées pour de la lumière se propageant de manière hélicoïdale en tournant vers la droite à la tangente de la périphérie intérieure dudit conducteur de lumière (01) et les deuxièmes structures de déviation de lumière (03) étant constituées pour de la lumière se propageant de manière hélicoïdale en tournant vers la gauche à la tangente de la périphérie intérieure du conducteur de lumière (01), de sorte que la lumière qui se propage dans le conducteur de lumière (01) et qui est destinée aux différentes structures de déviation de lumière (02, 03) se croise, et que les structures de déviation de lumière (02, 03) constituées pour la lumière se propageant de manière hélicoïdale en tournant dans l'un des sens sont au moins parallèles à la lumière se propageant de manière hélicoïdale en tournant dans l'autre sens, de manière à garantir que les structures de découplage de la lumière prévues pour la lumière qui se propage en tournant vers la droite dans le conducteur de lumière n'ont aucune influence sur la lumière qui se propage en tournant vers la gauche dans le conducteur de lumière, et que les structures de découplage de lumière prévues pour la lumière qui se propage en tournant vers la gauche dans le conducteur de lumière n'ont aucune influence sur la lumière qui se propage en tournant vers la droite dans le conducteur de lumière.

2. Conducteur de lumière selon la revendication 1, la lumière qui se propage dans le conducteur de lumière (01) et qui est destinée aux différentes structures de déviation de lumière (02, 03) se croise à angle droit.

3. Conducteur de lumière selon la revendication 1 ou 2, présentant une section transversale au moins approximativement à symétrie de rotation.

4. Conducteur de lumière selon la revendication 1, 2 ou 3, les structures de déviation de lumière (02, 03) étant des structures de couplage de la lumière.

5. Conducteur de lumière selon l'une quelconque des revendications 1, 2 ou 3, les structures de déviation de lumière (02, 03) étant des structures de découplage de la lumière (20, 30).

6. Élément d'éclairage doté d'au moins deux sources lumineuses et d'un conducteur de lumière (01) selon la revendication 5, les sources lumineuses injectant la lumière qu'elles émettent avec un sens de rotation hélicoïdal opposé, ladite injection de la lumière des sources lumineuses s'effectuant, vu en coupe transversale du conducteur de lumière (01), tangentiellement et, vu en coupe longitudinale du conducteur de lumière (01), sous des angles opposés.

7. Élément d'éclairage selon la revendication 6, l'injection de la lumière des sources lumineuses à partir de la même extrémité du conducteur de lumière (01) s'effectue de manière oblique par rapport à un axe longitudinal sous des angles de signes opposés, vu en coupe longitudinale du conducteur de lumière (01).

8. Élément d'éclairage selon la revendication 6 ou 7, l'injection de la lumière d'une première source lumineuse, vue en coupe longitudinale du conducteur de lumière (01), s'effectue sous un angle de + 45°, et l'injection de la lumière d'une deuxième source lumineuse, vue en coupe longitudinale du conducteur de lumière (01), s'effectue sous un angle de - 45° à partir de la même extrémité du conducteur de lumière (01).

9. Élément d'éclairage selon la revendication 6, 7 ou 8, les deux angles opposés se complétant pour former un angle total de 90°.

10. Élément lumineux selon l'une quelconque des revendications 6 à 9, le conducteur de lumière possédant des structures de découplage de la lumière sur une face arrière du conducteur de lumière opposée à un observateur, qui sont chacune adaptées à l'un des deux sens hélicoïdaux.

11. Procédé pour l'illumination sélective d'un conducteur de lumière (01) doté d'au moins deux sources lumineuses pouvant être commandées indépendamment l'une de l'autre et émettant leur lumière à la même extrémité du conducteur de lumière (01) dans celui-ci, qui prévoit que pour l'illumination d'une première section, la lumière d'une première source lumineuse disposée à une extrémité est couplée tangentiellement et inclinée d'un premier angle négatif par rapport à un axe longitudinal du conducteur de lumière (01) dans le conducteur de lumière (01), qui se propage en spirale en tournant à droite à l'intérieur du conducteur de lumière (01) sur sa périphérie intérieure, et qui est découplée du conducteur de lumière (01) au moyen de structures de découplage de lumière (20) disposées dans la première section perpendiculairement au sens de propagation de cette lumière, et, pour éclairer une deuxième section, de la lumière d'une deuxième source lumineuse disposée à la même extrémité étant couplée dans le conducteur de lumière (01) tangentiellement et inclinée d'un deuxième angle positif par rapport à l'axe longitudinal du conducteur de lumière (01), qui se propage en spirale en tournant vers la gauche à l'intérieur du conducteur de lumière (01) sur sa périphérie intérieure, et est découplée du conducteur de lumière (01) au moyen de structures de découplage de lumière (30) disposées dans la deuxième section perpendiculairement au sens de propagation de cette lumière, la lumière injectée par les deux sources lumineuses dans le conducteur de lumière (01) se croisant à l'intérieur du conducteur de lumière (01) et les structures de découplage de lumière (20, 30) prévues pour la lumière se propageant dans ledit un sens à l'intérieur du conducteur de lumière (01) étant disposées parallèlement au sens de propagation de la lumière se propageant dans l'autre sens à l'intérieur du conducteur de lumière (01), de sorte à garantir que les structures de découplage de la lumière prévues pour la lumière se propageant dans le conducteur de lumière en tournant à droite n'ont aucune influence sur la lumière se propageant dans le conducteur de lumière en tournant à gauche, et que les structures de découplage de la lumière prévues pour la lumière se propageant dans le conducteur de lumière en tournant à gauche n'ont aucune influence sur la lumière se propageant dans le conducteur de lumière en tournant à droite.

12. Procédé selon la revendication 11, les deux angles opposés se complétant pour former un angle total de 90°.

13. Procédé selon la revendication 11 ou 12, le premier angle étant de - 45 ° et le deuxième angle étant de + 45 °.

14. Procédé selon la revendication 11, 12, ou 13, l'illumination sélective comprenant une caractéristique de rayonnement de la deuxième section différente d'une caractéristique de rayonnement de la première section.

15. Procédé selon l'une quelconque des revendications 11 à 14, les deux sections se confondant.
